# EUROPÄISCHE PATENTSCHRIFT

(11) **EP 3 736 199 B1**
(45) Veröffentlichungstag und Bekanntmachung des Hinweises auf die Patenterteilung: **28.08.2024**
(21) Anmeldenummer: 20173859.8
(22) Anmeldetag: 11.05.2020
(51) Int. Cl.: B62K 11/14, B62K 23/06, B62L 3/02

(54) **HYDRAULIKGEBERVORRICHTUNG FÜR EINE HYDRAULISCHE BREMSE ODER KUPPLUNG LENKERGEFÜHRTER FAHRZEUGE UND HYDRAULISCHE BREMSE EINES LENKERGEFÜHRTEN FAHRZEUGES**
HYDRAULICS SENSOR DEVICE FOR A HYDRAULIC BRAKE OR CLUTCH OF STEERING-GUIDED VEHICLES AND HYDRAULIC BRAKE OF A STEERING-GUIDED VEHICLE
DISPOSITIF ÉMETTEUR HYDRAULIQUE POUR UN FREIN HYDRAULIQUE OU ACCOUPLEMENT DES VÉHICULES À DEUX ROUES ET FREIN HYDRAULIQUE D'UN VÉHICULE À DEUX ROUES

(30) Priorität: 09.05.2019 DE 102019206753; 19.06.2019 DE 102019208990
(43) Veröffentlichungstag der Anmeldung: 11.11.2020
(73) Patentinhaber: Gustav Magenwirth GmbH & Co. KG, 72574 Bad Urach (DE)
(72) Erfinder: Ruopp, Michael, 89180 Berghülen (DE); Wechsler, Axel, 71067 Sindelfingen (DE); Rösing, Philipp, 73765 Neuhausen (DE); Künstle, Reiner, 72555 Metzingen (DE)
(74) Vertreter: Friese Goeden Patentanwälte PartGmbB

(56) Entgegenhaltungen:
- EP-A1- 3 483 049
- EP-A2- 0 875 443
- DE-A1- 102015 010 839
- DE-U1- 20 107 599
- DE-U1- 202018 000 240
- GB-A- 800 196

## Beschreibung

Die Erfindung betrifft eine Hydraulikgebervorrichtung für eine hydraulische Bremse oder Kupplung eines lenkergeführten Fahrzeugs gemäß dem Oberbegriff von Anspruch 1 und eine hydraulische Bremse eines lenkergeführten Fahrzeugs mit einer oder mehreren derartigen Hydraulikgebervorrichtung(en) .

Aus der GB 800,196 A, welche die Präambel des Anspruchs 1 zeigt, ist eine Hydraulikgebervorrichtung bekannt, die in einem Lenkerrohr angeordnet ist. Die bekannte Hydraulikgebervorrichtung ist für ein geschlossenes System ohne Ausgleichsbehälter und weist einen relativ komplizierten Aufbau auf. In dem Hydraulikzylinder ist ein Druckzylinder angeordnet. Die Druckstange wird mit einer Umlenkung angesteuert, die um den Zylinder herum geführt ist und die von dem Hebel angesteuert wird. Dieser Aufbau ist sehr platzintensiv und nicht für offene Systeme mit einem Ausgleichsbehälter geeignet.

Aus der DE 10 2015 010 839 A1 und der DE 10 2015 010 858 A1 sind Hydraulikgebervorrichtungen für eine spezielle Lenkergeometrie bekannt, bei denen ein Lenkerrohr nach vorne geführt ist. An dem offenen Ende des Lenkerohrs ragt die Hydraulikgebervorrichtung nach vorne aus dem Lenkerrohr heraus und ist auch um das Lenkerrohr herum angeordnet.

Diese bekannten Hydraulikgebervorrichtungen sind nicht dafür geeignet, an Lenkern montiert zu werden, die quer zur Fahrzeuglängsachse verlaufen, wie sie beispielsweise bei Trekkingrädern, Mountainbikes oder den meisten Elektrofahrrädern verwendet werden.

Aus der US 6,502,675 B1 sind Hydraulikgebervorrichtungen für eine hydraulische Bremse eines lenkergeführten Fahrzeugs bekannt, bei denen der Geberzylinder in dem Lenkerrohr angeordnet ist.

Die aus der US 6,502,675 B1 bekannten Hydraulikgebervorrichtungen haben den Nachteil, dass die Geberzylinder in dem Lenkerrohr vom Hebel aus gesehen in Richtung Fahrzeugmitte angeordnet sind. Dort weist das Lenkerrohr in der Regel Biegungen auf. Dadurch steht nur ein sehr begrenzter Bauraum zur Verfügung und die Montage ist umständlich und schwierig, wenn man die üblichen gebogenen Lenkerrohre einsetzen will.

Der Erfindung liegt daher die Aufgabe zugrunde, eine Hydraulikgebervorrichtung anzugeben, die bei üblichen Lenkerrohren mit Biegungen in Richtung Fahrzeugmitte leicht montiert werden kann.

Die Aufgabe wird erfindungsgemäß durch eine Hydraulikgebervorrichtung gemäß den Merkmalen Anspruch 1 gelöst. Vorteilhafte Weiterbildungen der Erfindung finden sich in den Unteransprüchen.

Gemäß einer Ausführung der Erfindung wird eine Hydraulikgebervorrichtung, insbesondere für eine hydraulische Bremse oder Kupplung lenkergeführter Fahrzeuge, mit einem Hebel angegeben, der in einer Aufnahme drehgelenkig angeordnet ist, und einem Hydraulikzylinder angegeben, der in einem Lenkerrohr des lenkergeführten Fahrzeugs anordbar ist und einen darin verschiebbar angeordneten Kolben aufweist, wobei in dem Kolben ein Zentralventil angeordnet ist, wobei die Hydraulikgebervorrichtung eine Zugeinrichtung aufweist, die bei der Betätigung des Hydraulikgebervorrichtung eine Zugkraft auf den Kolben des Hydraulikzylinders ausübt.

Diese Ausführung der Erfindung hat den Vorteil, dass sie sehr kurzbauend und einfach ausgebildet werden kann, damit sie beispielsweise in dem Lenkrrohr angeordnet bzw. darin integriert bzw. als Einheit ausgebildet werden kann, die in den begrenzten Bauraum des Lenkerrohr eingesetzt werden kann.

Diese Ausführung der Erfindung hat den Vorteil, dass infolge der erfindungsgemäßen Ausgestaltung genügend Bauraum zur Verfügung steht, denn der Geberzylinder kann vom Hebel zur Fahrzeugseite, d.h. im geraden Bereich des Griffrohrs angeordnet werden.Erfindungsgemäß kann das Zentralventil eine Verbindung zwischen dem in dem Hydraulikzylinder vorgesehenen Druckraum und einem Ausgleichsraum im Ruhezustand herstellen und bei Betätigung der Hydraulikgebervorrichtung verschliessen. Das Zentralventil kann somit die Ausgleichsbohrung ersetzen, die üblicherweise bei bekannten Hydraulikgebervorrichtungen ohne Zentralventil bei der Betätigung von der Kolbendichtung überfahren wird.

Erfindungsgemäß kann das Zentralventil ein Schließglied umfassen, das als Hydraulikkanal ausgebildet ist. Vorzugsweise kann der Hydraulikkanal dabei eine Verbidung zum Ausgleichsbehälter schaffen bzw. aufweisen.

Erfindungsgemäß ist der Hydraulikzylinder als Zugzylinder ausgebildet. Unter einem Zugzylinder sind insbesondere Hydraulikzylinder zu verstehen, bei denen eine Zugeinrichtung zur Betätigung der Hydraulikgebervorrichtung vorgesehen ist. Die Zugeinrichtung kann dabei so ausgebildet sein, dass bei der Betätigung der Hydraulikgebervorrichtung eine Zugkraft auf die Zugeinrichtung durch den Hebel bzw. das Druckstück ausgeübt wird und die Zugeinrichtung den Kolben in Richtung des Druckraums des Hydraulikzylinders zieht.

Erfindungsgemäß kann derHebel mit einem Kraftübertragungsglied und einem Einsatz zum Einstecken in ein Lenkerrohr ausgebildet sein, wobei der Einsatz ein Ende umfasst, an dem ein Hydraulikzylinder (bzw. Geberzylinder) mit einem Druckraum ausgebildet und/oder angeordnet ist, in dem ein Kolben verschiebbar angeordnet ist, und eine Eingriffsöffnung für den Eingriff des Kraftübertragungsglieds umfasst.

Erfindungsgemäß kann das Kraftübertragungsglied ein Fortsatz des Hebels bzw. ein Fortsatz eines optional im Kraftübertragungsweg vorgesehenes Druckstücks sein.

Erfindungsgemäß kann bei den Ausführungen mit Ausgleichsraum eine Verbindung zwischen dem Ausgleichsraum und dem Druckraum durch das Zentralventil geschaffen werden. Das Zentralventil kann dabei einen Durchgang aufweisen, der durch den Kolben der Gebervorrichtung verläuft. Der Durchgang durch den Kolben kann durch die Zugeinrichtung verschlossen werden. Alternativ oder zusätzlich kann das Zentralventil auf eine andere Weise bei Betätigung der Hydraulikgebervorrichtung verschlossen werden, beispielsweise durch eine vorgespannte Ventilschließfeder. Das Schließglied des Zentralventils kann durch ein Ende der durch den Kolben verlaufenden Zugeinrichtung gebildet werden.

Erfindungsgemäß kann der Ventilsitz des Zentralventils in dem Kolben ausgebildet sein. Das Zentralventil kann eine Dichtung aufweisen, die zwischen Schließglied und Ventilsitz angeordnet ist. Alternativ oder zusätzlich kann das Zentralventil derart ausgebildet und angeordnet sein, dass es durch das Zusammenwirken von Schließglied und Ventilsitz geschlossen wird.

Erfindungsgemäß kann die Hydraulikgebervorrichtung eine Verschiebeeinrichtung aufweisen, die in dem Lenkerrohr des lenkergeführten Fahrzeugs in Längsrichtung des Lenkerrohrs verschiebbar angeordnet ist, wobei die Verschiebeeinrichtung mit der Zugeinrichtung verbunden ist.

Erfindungsgemäß kann die Zugeinrichtung einen Verbindungsabschnitt bzw. eine Verbindungseinrichtung aufweisen, die in der Verschiebeeinrichtung angeordnet und/oder gesichert sein kann. Die Verschiebeeinrichtung kann dabei zwei- oder mehrteilig ausgebildet sein bzw. eine Klemmeinrichtung aufweisen, die derart angeordnet und ausgebildet ist, dass sie die Verbindungseinrichtung der Zugeinrichtung an der Verschiebeeinrichtung sichern bzw. befestigen kann. Dabei kann die Klemmeinrichtung eine Kontur aufweisen, an der das Kraftübertragungsteil (z.B. Druckstück- bzw. Hebelfortsatz angreift), die derart ausgebildet sein kann, dass eine gewünschte Veränderung des Übersetzungsverhältnisses im Laufe der Betätigung erreicht wird.

Erfindungsgemäß kann die Zugeinrichtung bei Betätigung der Hydraulikgebervorrichtung durch das Kraftübertragungsteil mit Druck beaufschlagt werden.

Erfindungsgemäß kann die Hydraulikgebervorrichtung einen Ausgleichsbehälter für Hydraulikflüssigkeit aufweisen, der in dem Einsatz ausgebildet und/oder angeordnet ist.

Erfindungsgemäß kann der Ausgleichsbehälter an dem Ende des Einsatzes angeordnet und/oder ausgebildet sein, das dem Ende des Einsatzes gegenüberliegt, an dem der Hydraulikzylinder angeordnet und/oder ausgebildet ist.

Erfindungsgemäß kann die Eingriffsöffnung in dem Einsatz zwischen dem Ausgleichsbehälter und dem Hydraulikzylinder angeordnet sein.

Erfindungsgemäß kann die Zugeinrichtung eine Zugstange umfassen. Dabei kann die Zugstange gleichzeitig die Kolbenstange für den Kolben der Hydraulikgebervorrichtung sein. Durch die Doppelfunktion der Zugstange kann ein kompakter und einfacher Aufbau erreicht werden.

Erfindungsgemäß kann die Kolbenstange durch den Druckraum verlaufen. Das hat den Vorteil eines kompakten und einfachen Aufbaus.

Erfindungsgemäß kann ein Hydraulikkanal von dem Hydraulikzylinder zu der Hydraulikleitung, die mit der zugeordneten Hydrauliknehmervorrichtung verbunden ist, in der Zugeinrichtung angeordnet sein.

Erfindungsgemäß kann der Hydraulikkanal in der Zugstange angeordnet bzw. ausgebildet sein. Diese Ausführung hat den Vorteil, dass wegen der Doppelfunktion der Zugstange sehr wenig Platz benötigt wird.

Erfindungsgemäß kann die Hydraulikgebervorrichtung eine Verschiebeeinrichtung aufweisen, die in dem Lenkerrohr des lenkergeführten Fahrzeugs in Längsrichtung des Lenkerrohrs verschiebbar angeordnet ist.

Erfindungsgemäß kann die Verschiebeeinrichtung mit der Zugeinrichtung verbunden sein. Dabei kann eine Verbindungseinrichtung zur Verbindung der Verschiebeeinrichtung mit der Zugeinrichtung vorgesehen sein.

Bei den Ausführungen mit Zugstange kann die Zugstange einen gebogenen Abschnitt aufweisen bzw. um einen bestimmten Winkel gebogen ausgebildet sein, um die Verbindungseinrichtung auszubilden. Die Zugstange bzw. der gebogene Abschnitt kann dabei um einen Winkel von mehr als 45 Grad, vorzugsweise mehr als 60 Grad, weiter vorzugsweise mehr als 75 Grad, und bevorzugt um einen Winkel von ungefähr 90 Grad gebogen ausgebildet sein. Der Biegeradius des gebogenen Abschnitts der Zugstange kann dabei weniger als 80%, vorzugsweise weniger als 70%, weiter vorzugsweise weniger als 60% und bevorzugt ungefähr 50% des Durchmessers des Lenkerrohrs bzw. des Einsatzes bzw. des Hydraulikzylinders betragen. Durch dieses Verfahren können die Montage vereinfacht und die Kosten für die Zugeinrichtung deutlich gesenkt werden. Dabei kann eine Sicherungseinrichtung vorgesehen sein, um die Zugeinrichtung in der Verschiebeeinrichtung zu sichern. Vorteilhafterweise kann die Sicherungseinrichtung derart ausgebildet und angeordnet sein, dass sie den gebogenen Abschnitt der Zugstange abstützt, vorzugsweise derart, dass eine Verformung bzw. Ermüdung des gebogenen Bereichs der Zugstange bei Bestätigung der Hydraulikgebervorrichtung durch die Abstützung behindert bzw. verhindert wird. Durch die Abstützung kann sich der gebogene Bereich der Zugstange auf der Sicherungseinrichtung abstützen, so dass möglichst keine Kräfte auf den gebogenen Abschnitt ausgeübt werden, die den gebogenen Abschnitt wieder in eine gerade Form bzw. in eine weniger gebogene Form bringen würden. Erfindungsgemäß kann die Zugeinrichtung somit eine Sicherungseinrichtung aufweisen, die derart ausgebildet und angeordnet ist, dass sie die Zugeinrichtung in der Verschiebeeinrichtung sichert und den gebogenen Bereich der Zugstange derart abstützt, eine Verformung des gebogenen Bereichs verhindert wird. Dabei kann die Sicherungseinrichtung als Bolzen bzw. Stift ausgebildet sein. Diese Ausführungen haben den Vorteil, dass eine längere Lebensdauer bzw. Haltbarkeit der Zugstange geschaffen wird.

Erfindungsgemäß kann der Hebel an zwei Drehachsen angelenkt sein, an denen zwei an dem Hebel drehgelenkig angeordnete Arme angreifen. Diese Ausführung hat den Vorteil, dass bei einem tiefliegenden Drehpunkt die Zunahme der Übersetzung etwas schwächer ausfallen kann.

Erfindungsgemäß kann der eine Arm Teil eines Druckstücks sein.

Erfindungsgemäß kann die Zugeinrichtung eine Drehsicherung aufweisen, die ein Verdrehen in dem Lenkerrohr verhindert bzw. einschränkt. Dabei kann die Drehsicherung eine Ausrichteeinrichtung zwischen der Verschiebeeinrichtung und einem Druckstück umfassen, das die Kraft von dem Hebel auf die Verschiebeeinrichtung überträgt. Beispielsweise kann die Verschiebeeinrichtung eine Nut umfassen, an die Gabelbeine bzw. zwei Fortsätze des Druckstücks angreifen. Bei Ausführungen ohne Druckstück kann der Hebe auch direkt an der Verschiebeeinrichtung entsprechend angreifen. Alternativ oder zusätzlich kann die Verschiebeeinrichtung auch zwei Stege umfassen, zwischen denen ein Steg des Druckstücks bzw. des Hebels eingreift.

Eine Drehsicherung ist vorteilhaft, weil die Hydraulikleitung eventuell ein Drehmoment auf die Hydraulikgebervorrichtung ausüben könnte, weil die Hydraulikleitung vor der Montage auf einer Rolle angeordnet gewesen sein könnte und daher einen Drall aufweist.

Erfindungsgemäß kann die Verschiebeeinrichtung eine Kontur aufweisen, um vorzugsweise mit zunehmender Betätigung der Hydraulikgebervorrichtung eine abnehmende Übersetzung zu erreichen. Für diese Ausführungen der Erfindung ist es vorteilhaft, eine Drehsicherung der Verschiebeeinrichtung vorzusehen.

Erfindungsgemäß kann die Hydraulikgebervorrichtung derart ausgebildet sein, dass eine variable Übersetzung realisiert ist, wobei vorzugsweise mit zunehmender Betätigung der Hydraulikgebervorrichtung eine abnehmende Übersetzung zu erreichbar ist. Die variable Übersetzung kann dabei vorzugsweise mechanisch erfolgen. Alternativ oder zusätzlich kann die Übersetzung auch hydraulisch mit dem Betätigungsweg variiert werden. Bei der mechanischen Veränderung der Übersetzung kann die Veränderung durch den Einsatz von Kulissen und/oder Exzenter erfolgen, mit denen vorzugsweise die Länge der wirksamen Hebelarme verändert wird. Zusätzlich oder alternativ kann die gewünschte Bewegungsgeometrie durch das Vorsehen von Mehrgelenkvorrichtungen realisiert werden, wie beispielsweise Parallelogramm-Gelenkvorrichtungen. Alternativ oder zusätzlich können betätigungswegabhängige bzw. betätigungswinkelanhängige Laufflächengeometrien vorgesehen werden. Diese können beispielsweise an zusammenwirkenden Laufflächen ausgebildet werden. Bei der Betätigung zusammenwirkende Laufflächen können erfindungsgemäß an dem Hebel und/oder einer optional vorgesehenen Kulisse, an dem Hebel und/oder einem optional vorgesehenen Druckstück, im Fall eines mehrteiligen Hebels an einem ersten und/oder einem zweiten Hebelteil, an einer optional vorgesehenen Kulisse und/oder einem optional vorgesehen Druckstück, an dem optional vorgesehenen Druckstück und/oder dem Kolben, an der Kulisse und/oder dem Kolben, an dem Hebel und/oder dem Kolben vorgesehen sein.

Erfindungsgemäß kann die Hydraulikgebervorrichtung eine Hebellagerung zur Aufnahme des Hebels an der Hydraulikgebervorrichtung aufweisen. Dabei kann die Hebellagerung in einem außerhalb des Lenkerrohr angeordneten Lagerbock angeordnet und ausgebildet sein. Dabei kann der Lagerbock als separates Bauteil ausgeführt sein. Der Lagerbock kann einteilig oder mehrteilig ausgeführt sein. Bei einer mehrteiligen Ausführung kann der Lagerbock mit geeigneten Verbindungsmitteln verbunden sein, wobei er vorzugsweise auf das Lenkerrohr geklemmt ist. Die Verdrehsicherung des Lagerbocks kann auch durch den Eingriff des Hebels und/oder eines im Kraftfluss optional vorgesehenen Druckstücks realisiert sein, der bzw. das in das Lenkerrohr zur Kraftübertragung eingreift bzw. eintritt.

Erfindungsgemäß kann die Hebellagerung in die Hydraulikgebervorrichtung integriert sein. Die Hebellagerung kann dabei derart angeordnet und ausgebildet sein, dass sie innerhalb des Lenkerrohrs, im Bereich der Wandung des Lenkerohrs und/oder an aus dem Lenkerrohr vorstehenden Bereichen der Hydraulikgebervorrichtung angeordnet ist. Bei Ausführungen der Erfindung, bei denen die Hydraulikgebervorrichtung als in das Lenkerrohr eingeführte Kartusche ausgebildet ist, kann die Hebellagerung derart ausgeführt sein, dass die Hebellagerung als Bauteil ausgebildet ist, dass zumindest teilweise durch eine Öffnung in dem Lenkerrohr in das Lenkerrohr eingreifend angeordnet werden kann. Alternativ oder zusätzlich kann die Hebellagerung in das Lenkerrohr integriert sein. Dabei kann die Hebellagerung die weitere Funktion der Sicherung der in dem Lenkerrohr angeordneten Hydraulikgebervorrichtung zumindest teilweise gewährleisten. Die Sicherung kann eine Verdrehsicherung und/oder eine Sicherung gegen ein Verschieben in axialer Richtung sein. Alternativ oder zusätzlich kann die Hebellagerung außerhalb des Lenkerohrs angeordnet und ausgebildet sein, beispielsweise als Lagerbock, der separat und oder in das Lenkerrohr integriert bzw. teilweise integriert sein kann.

Erfindungsgemäß kann die Hebellagerung in vom Lenkerrohr ausgebildete Laschen angeordnet und/oder ausgebildet sein. Die Laschen können dabei aus dem Material des Lenkerrohrs zumindest teilweise ausgebildet sein, dass bei der Ausbildung der Öffnung in dem Lenkerrohr für den Durchtritt des Lenkers zur Verfügung steht. Mit anderen Worten können die Laschen zumindest teilweise dadurch ausgebildet sein, dass Material des Lenkerohrs zur Ausbildung einer Öffnung nach außen gebogen wird. Alternativ und/oder zusätzlich kann das Lenkerohr auch aus einem Faserverbundmaterial ausgebildet sein, wobei die Laschen bei der Herstellung integriert werden können, die in der Nähe einer Öffnung für den Durchtritt des Hebels und/oder des eines Druckstücks und/oder eines Bauteils in der Kraftübertragungskette vorgesehen sind, vorzugsweise auf beiden Seiten der Öffnung. Alternativ kann auch eine einseitige Lagerung vorgesehen sein, um auf der anderen Seite Bauraum für andere Komponenten zu schaffen. Beispielsweise kann nur eine Lasche vorgesehen sein. Alternativ kann bei Ausführungen mit zwei Laschen die andere Lasche der Aufnahme weiterer Komponenten dienen.

Erfindungsgemäß kann die Hebellagerung in dem Druckstück und/oder dem Hebel integrierte Zapfen umfassen. Die Zapfen können dabei in entsprechende Aufnahmen angeordnet sein.

Erfindungsgemäß kann die Hebellagerung mit einer Verschraubung, einer Vernietung, einer Verpressung, einer Verstiftung und/oder einer beliebigen Kombination dieser dem Fachmann bekannten Lagerungen ausgebildet sein.

Erfindungsgemäß kann die Hebellagerung derart angeordnet und ausgebildet sein, dass die Hebellagerachse schräg verläuft, d.h. schräg zu einer Senkrechten der Achse bzw. Erstreckung des Lenkerrohrs. Der Winkel der Hebellagerachse zur Achse des Lenkerohrs kann mehr als 60 Grad, vorzugsweise mehr als 70 Grad und bevorzugt mehr als 80 Grad betragen. Der Winkel der Hebellagerachse zur Achse des Lenkerohrs kann weniger als 89 Grad, vorzugsweise weniger als 88 Grad und bevorzugt weniger als 87 Grad betragen. Beispielweise kann der Winkel ungefähr 85 Grad betragen.

Erfindungsgemäß kann die Hebellagerung derart angeordnet und ausgebildet sein, dass der Hebellagerpunkt und/oder die Richtung der Hebellagerachse drehwinkelabhängig ist. Dabei kann die Hebellagerung einen Exzenter und/oder eine Schneckenvorrichtung aufweisen, die den Hebellagerpunkt, d.h. den Abstand der Hebeldrehachse von dem Lenkerrohr, und/oder die momentane Richtung der Lagerachse, d.h. den Winkel zwischen momentaner Hebeldrehachse und dem Lenkerohr, in Abhängigkeit von dem Drehwinkel des Hebels bzw. dem Betätigungsweg ändert.

Erfindungsgemäß kann der Hebellagerpunkt verstellbar sein.

Erfindungsgemäß kann der Hebel entnehmbar sein. Das kann beispielsweise als Diebstahlsicherung dienen. Alternativ und/oder zusätzlich kann der Hebel in einer anderen Richtung wieder einsetzbar sein, in der die Hydraulikgebervorrichtung beispielsweise voll betätigt ist. Bei einer Bremse wäre die Bremse dann betätigt, was sowohl als Diebstahlsicherung als auch als Transportsicherung dienen kann.

Erfindungsgemäß kann in der Hebellagerung eine Einrichtung für eine elektrische Gasbetätigung integriert sein.

Erfindungsgemäß kann die Hydraulikgebervorrichtung eine Griffweiteneinstellvorrichtung aufweisen, mit der der Abstand zwischen der Aufnahme für den Hebel und dem Geberzylinder zur Einstellung der Griffweite einstellbar ist.

Erfindungsgemäß kann die Aufnahme auf dem Lenkerrohr verschiebbar angeordnet sein.

Erfindungsgemäß kann der Geberzylinder in dem Lenkerrohr verschiebbar angeordnet sein.

Erfindungsgemäß kann der Geberzylinder an dem Lenkerrohr mit einem Befestigungsmittel befestigt sein. Das Befestigungsmittel kann eine Schraube sein. In dem Lenkerrohr kann ein Langloch ausgebildet sein. Das Langloch kann einen Rand mit Konturen bzw. mit einer Rasterung aufweisen, damit das Befestigungsmittel nur in bestimmten Stellungen festgezogen werden kann.

Erfindungsgemäß kann die Hydraulikgebervorrichtung eine Verschiebeeinrichtung aufweisen, die in dem Lenkerrohr des lenkergeführten Fahrzeugs in Längsrichtung des Lenkerrohrs verschiebbar angeordnet ist, wobei die Verschiebeeinrichtung mit der Zugeinrichtung verbunden ist. Dabei kann die Länge der Zugeinrichtung einstellbar sein.

Erfindungsgemäß kann die Zugeinrichtung eine Zugstange aufweisen.

Erfindungsgemäß kann die Länge der Zugstange einstellbar sein. Alternativ oder zusätzlich kann erfindungsgemäß der Angriffspunkt der Zugeinrichtung an der Verschiebeeinrichtung und/oder an dem Geberzylinder einstellbar sein.

Beispielsweise kann die Verbindung zwischen Verschiebeeinrichtung und Zugeinrichtung bzw. zwischen Zugeinrichtung und Geberzylinder über eine Schraubverbindung erfolgen. Das hat den Vorteil, dass durch Drehen der Zugeinrichtung bzw. einer Schraube der Schraubverbindung der Angriffspunkt leicht verstellt bzw. eingestellt werden kann.

Erfindungsgemäß kann die Zugeinrichtung eine Zugstange aufweisen, die über eine Schraube mit der Verschiebeeinrichtung verbunden ist.

Erfindungsgemäß kann die Hydraulikgebervorrichtung einen in dem Lenkerrohr angeordneten Ausgleichsraum aufweisen.

Erfindungsgemäß kann der Geberzylinder zwischen der Aufnahme für den Hebel und Ausgleichraum angeordnet sein.

Erfindungsgemäß kann der Geberzylinder einen Fortsatz aufweisen, in dem der Ausgleichsraum angeordnet ist.

Erfindungsgemäß kann die Aufnahme für den Hebel an der Außenseite des Lenkerrohrs anordnet sein. Dabei kann der Hebel in Richtung Fahrzeugmitte gerichtet sein.

Erfindungsgemäß kann der Kolben des Geberzylinders einen Fortsatz aufweisen, der sich in den Ausgleichsraum erstreckt. Dabei kann in dem Fortsatz des Kolbens ein Hydraulikkanal angeordnet sein.

Erfindungsgemäß kann der Hydraulikkanal mit dem Druckraum in dem Geberzylinder verbunden sein.

Erfindungsgemäß kann der Hydraulikkanal durch den Ausgleichsraum verlaufen.

Erfindungsgemäß kann der Ausgleichsraum an der Außenseite des Lenkerrohrs anordnet sein.

Erfindungsgemäß kann die Aufnahme für die Entlüftungsschraube einen Luerkonus zur Aufnahme einer handelsüblichen Spritze aufweisen.

Erfindungsgemäß kann ein Entlüftungsventil an dem Lenkerende vorgesehen sein. Das Entlüftungsventil kann als Alternative zu der Entlüftungsschraube vorgesehen werden. Es ist auch möglich beide Varianten vorzusehen. Dabei kann die Aufnahme für das Entlüftungsventil einen Luerkonus zur Aufnahme einer handelsüblichen Spritze aufweisen. Das hat den Vorteil, dass man das System vor dem Einsetzen bzw. nach Entfernen des Entlüftungsventils einfach befüllen kann.

Erfindungsgemäß kann die Hydraulikgebervorrichtung einen Sensor zur Erfassung der Stellung des Hebels aufweisen. Dabei kann die Stellung des Hebels verwendet werden, um ein Bremslicht zu betätigen. Weiter kann bei Fahrzeugen mit einem Elektroantrieb die Stellung des Hebels verwendet werden, eine Rekuperation anzusteuern.

Erfindungsgemäß kann die Hydraulikgebervorrichtung eine Anzeige aufweisen, die den Füllstand in dem Ausgleichsraum anzeigt. Dabei kann die Anzeige hydraulisch mit dem Ausgleichsraum verbunden sein.

Erfindungsgemäß kann die Anzeige im Griffbereich des Lenkers angeordnet sein.

Erfindungsgemäß kann die Anzeige an dem Ende des Lenkerrohrs vorgesehen sein. Dazu kann das Ausgleichsgehäuse vorzugsweise zweiteilig ausgebildet sein, damit ein Anzeigeabschnitt vorteilhafterweise transparent ausgebildet werden kann.

Alternativ oder zusätzlich kann die Anzeige einen Sensor zum Erfassen des Füllstands des Ausgleichsraums und Mittel zur Ansteuerung der Anzeige umfassen. Dabei kann die Sensoreinrichtung einen Magneten umfassen, der an dem Balg angeordnet ist und mit einem Sensor zusammenwirkt, der beispielsweise an der Wand des Ausgleichsgehäuses und/oder des Geberzylinders in dem Bereich des Ausgleichsgehäuses vorgesehen sein kann.

Erfindungsgemäß kann der Sensor derart ausgebildet sein, dass er das Signal des entsprechenden Signalgebers kapazitiv, elektrisch, optoelektrisch, mechanisch und/oder akustisch, beispielsweise über Ultraschall erfassen kann.

Erfindungsgemäß kann der Füllstand an ein Steuergerät und/oder eine Anzeige übermittelt werden. Die Übermittlung des Signals (z.B. des Füllstandes) kann dabei über Kabel und/oder Funk erfolgen.

Erfindungsgemäß kann der Hebel einteilig ausgebildet sein.

Erfindungsgemäß kann der Hebel mehrteilig ausgebildet sein. Dabei können die Bauteile des Hebels drehgelenkig miteinander verbunden sein. Vorzugsweise kann dabei eine Griffweiteneinstellvorrichtung vorgesehen sein, mit der beispielsweise der Winkel zwischen den Bauteilen verstellt werden kann. Das Vorsehen eines mehrteiligen Hebels kann den Vorteil haben, dass eine bessere ergonomische Anpassung der Hebelgeometrie möglich ist. Alternativ und/oder Zusätzlich können unterschiedliche Bauteile mit verschiedenen Abmessungen verwendet werden, um eine bessere Anpassung zu erreichen. Beispielsweise kann eine Anpassung durch die Anpassung der Griffschale des Hebels erfolgen.

Erfindungsgemäß kann der Hebel eine Schutzvorichtung aufweisen, beispielsweise eine vorzugsweise kugelartige Verdickung am Hebelende.

Erfindungsgemäß kann der Hebel aus Aluminium, aus Stahl, aus Kunststoff, aus einem Faserverbundwerkstoff, aus Titan und/oder einer Kombination dieser Werkstoffe ausgebildet sein bzw. eines oder mehrere dieser Materialien umfassen.

Erfindungsgemäß kann die Hydraulikgebervorrichtung bis auf den Betätigungshebel vollständig in dem Lenkerrohr integriert bzw. aufgenommen sein.

Erfindungsgemäß kann die Hydraulikgebervorrichtung eine Exzentereinrichtung zur exzentrischen Lagerung des Hebels in dem Gehäuse bzw. Anlenkung des Hebels an dem Gehäuse aufweisen. Dabei kann die Exzentereinrichtung eine Dreheinrichtung aufweisen, in der aussermittig eine Anlenkaufnahme zur Aufnahme des Hebels und/oder eines Druckstücks ausgebildet sein kann.

Erfindungsgemäß kann sich das Lenkerrohr des lenkergeführten Fahrzeugs quer zur Fahrzeugrichtung ertrecken. Mit anderen Worten kann das Lenkerrohr derart ausgebildet und angeordnet sein, dass die Enden des Lenkerrohrs an den beiden Seiten des Fahrzeugs angeordnet sind. Erfindungsgemäß kann die Hydraulikgebervorrichtung an einem Ende des Lenkerrohrs angeordnet sein, bzw. kann ein Paar Hydraulikgebervorrichtungen (beispielsweise für eine Vorderrradbremse und eine Hinteradbremse) an beiden Lenkerenden angeordnet sein, die auf gegenüberliegenden Fahrzeugseiten liegen (z.B. in Fahrtrichtung links und rechts).

Erfindungsgemäß kann die Hydraulikgebervorrichtung einen Ausgleichsbehälter aufweisen. Der Ausgleichsbehälter kann im Bereich des Lenkerrohrendes angeordnet sein, beispielsweise an der Seite des lenkergeführten Fahrzeugs. Dabei kann der Ausgleichsbehälter ein Sichtfenster aufweisen. Alternativ und/oder zusätzlich kann der Ausgleichsbehälter bzw. ein weiterer Ausgleichsbehälter abgesetzt im Lenkerrohr ausgebildet und angeordnet sein. Alternativ und/oder zusätzlich kann der Ausgleichsbehälter bzw. ein weiterer Ausgleichsbehälter außerhalb des Lenkerrohrs ausgebildet und angeordnet sein.

Erfindungsgemäß kann die Hydraulikgebervorrichtung eine Aufnahme aufweisen, die beispielweise als Spiegelhalterung ausgebildet sein kann. Die Aufnahme kann an dem Ausgleichsbehälter angeordnet und ausgebildet sein. Alternativ und/oder zusätzlich kann die Aufnahme bzw. eine weitere Aufnahme an einer Schelle zur Befestigung des Hebels ausgebildet sein. Dabei kann die Aufnahme eine Drehmomentabstützung aufweisen, mit der die Aufnahme ein etwaiges Drehmoment auf das Lenkrerrohr und nicht auf die Hebelhalterung überträgt. Die Drehmeomentabstützung kann dabei entsprechend der EP 3 156 313 A1 ausgebildet sein, deren gesamter Inhalt durch Bezugnahme in die vorliegende Anmeldung aufgenommen ist.

Erfindungsgemäß kann die Aufnahme der Hydraulikgebervorrichtung eine Aufnahme für einen Drehgriff umfassen. Dabei kann die Aufnahme gleichzeitig als Aufnahme und/oder Halterung für den Hebel ausgebildet und/oder angeordnet sein. Dabei kann der Drehgriff zur Betätigung von Gas und/oder Kupplung ausgebildet sein. Dabei kann der Drehgriff zur elektrischen Betätigung von Gas und/oder Kupplung ausgebildet sein.

Erfindungsgemäß kann die Schelle zweiteilig ausgebildet sein. Dabei kann die Schelle mit zwei Schrauben verspannt werden, um eine Klemmung an dem Lenkerrohr zu realisieren.

Erfindungsgemäß kann die Schelle in die Hebellagerung integriert sein. Die Integration der Schelle in die Hebellagerung kann dabei über eine starre Verbindung realisiert werden. Dabei kann ein Schlitz vorgesehen werden, um eine Klemmung an dem Lenkerrohr zu ermöglichen. Alternativ oder zusätzlich kann eine flexible Verbindung zwischen Hebellagerung und der Schelle vorgesehen werden, beispielsweise über eine Gelenkverbindung. Alternativ oder zusätzlich kann eine gelenkige Verbindung zwischen Hebellagerung und der Schelle vorgesehen werden. Dabei kann eine Verstiftung oder Verschraubung vorgesehen werden.

Erfindungsgemäß können in der Aufnahme Bedienelemente vorgesehen und/oder integriert sein. Die Bedienlemente können dabei Schalter und Hebel zur Bedienung bzw. Betätigung von verstellbaren Sattelstützen, von Blinkern, einer Hupe, der Beleuchtung, der Schaltung oder anderen Komponenten umfassen. Die Betätigung kann dabei mechanisch, elektrisch, hydraulisch und/oder über Funk erfolgen. Erfindungsgemäß kann beim Bremsen auch ein automatisches Runterschalten realisiert werden, beispielsweise über eine entsprechende Programmierung eines Steuergerätes, das gegebenfalls auch die aktuelle Geschwindigkeit bei der Entscheidung berücksichtigt, wann das automatische Schalten in einen niedrigeren Gang erfolgen soll.

Erfindungsgemäß kann die Hydraulikgebervorrichtung derart ausgebildet sein, dass sie ergonomisch an den Fahrer angepasst werden kann. Dabei kann die Hydraulikgebervorrichtung eine Einrichtung zur Einstellung des Neigungswinkels des Hebels umfassen. Die Einstellung des Neigungswinkels kann beispielsweise über die Exzentereinrichtung erfolgen, wenn diese verstellbar ausgebildet ist. Zusätzlich und/oder alternativ kann die Hydraulikgebervorrichtung eine Einrichtung zur Verstellung des Leerwegs umfassen. Zusätzlich und/oder alternativ kann die Hydraulikgebervorrichtung eine Einrichtung zur Verstellung der mechanischen Übersetzung umfassen.

Zusätzlich und/oder alternativ kann die Hydraulikgebervorrichtung eine Einrichtung zur Verstellung der Griffweite umfassen. Zusätzlich und/oder alternativ kann die Hydraulikgebervorrichtung eine Einrichtung zur Verstellung der axialen Position der Hydraulikgebervorrichtung an dem Lenkerrohr umfassen.

Erfindungsgemäß kann die Hydraulikgebervorrichtung einen Schalter aufweisen, der bei der Betätigung der Hydraulikgebervorrichtung betätigt und/oder aktiviert wird. Der Schalter kann beispielsweise ein Bremslichtschalter und/oder ein Kupplungsschalter sein. Der Schalter kann dabei in dem Hebel angeordnet und ausgebildet sein. Dabei kann der Bremslichtschalter durch die innere Verformung des Hebels und/oder ein Gelenk aktiviert werden: Die Aktivierung des Bremslichtschalters kann beispielsweise entsprechend der Offenbarung der deutschen Anmeldung DE 10 2014 111 917 A1 erfolgen, deren gesamter Inhalt durch Bezugnahme in die vorliegende Anmeldung aufgenommen ist.

Erfindungsgemäß kann der Schalter (z.B. Bremslichtschalter und/oder ein Kupplungsschalter) extern am Lenkerrohr bzw. Lenker, wie beispielsweise ein Totmannschalter, ausgebildet und angeordnet sein.

Erfindungsgemäß kann der Schalter (z.B. Bremslichtschalter und/oder ein Kupplungsschalter) intern im Lenkerrohr bzw. Lenker, wie beispielsweise ein Totmannschalter, ausgebildet und angeordnet sein.

Erfindungsgemäß kann der Schalter (z.B. Bremslichtschalter und/oder ein Kupplungsschalter) extern an der Hebellagerung, wie beispielsweise ein Totmannschalter, ausgebildet und angeordnet sein.

Erfindungsgemäß kann der Schalter (z.B. Bremslichtschalter und/oder ein Kupplungsschalter) als ein Reed-Schalter ausgebildet sein.

Erfindungsgemäß kann der Schalter (z.B. Bremslichtschalter und/oder ein Kupplungsschalter) als ein Hall-Schalter ausgebildet sein.

Erfindungsgemäß kann der Schalter (z.B. Bremslichtschalter und/oder ein Kupplungsschalter) als ein Hall-Proportional-Sensor ausgebildet sein.

Erfindungsgemäß kann der Schalter (z.B. Bremslichtschalter und/oder ein Kupplungsschalter) als ein mechanischer Schalter ausgebildet sein.

Erfindungsgemäß kann der Schalter (z.B. Bremslichtschalter und/oder ein Kupplungsschalter) als ein optoelektrischer Schalter ausgebildet sein.

Erfindungsgemäß kann der Schalter (z.B. Bremslichtschalter und/oder ein Kupplungsschalter) derart ausgebildet sein, dass er das Signal des entsprechenden Signalgebers kapazitiv, elektrisch, optoelektrisch, mechanisch und/oder akustisch, beispielsweise über Ultraschall erfassen kann.

Erfindungsgemäß kann das Signal des Schalters (z.B. die Bremsbetätigung, die Bremshebelstellung und/oder die Kupplungsschalterbetätigung) an ein Steuergerät und/oder eine Anzeige übermittelt werden. Die Übermittlung des Signals kann dabei über Kabel und/oder Funk erfolgen.

Erfindungsgemäß kann die Hydraulikgebervorrichtung eine Schutzvorrichtung aufweisen. Dabei kann die Schutzvorrichtung einen Handschutz umfassen. Die Schutzvorrichtung kann an einem innenliegenden Bereich und/oder einem außenliegenden Bereich an das Lenkerrohr geklemmt sein. Die Schutzvorrichtung bietet auch einen Schutz für die Mechanik und Hydraulik bei einem Schlag und/oder Sturz.Erfindungsgemäß kann die Hydraulikgebervorrichtung an einem Lenkerstummel angeordnet sein.

Erfindungsgemäß kann die Hydraulikgebervorrichtung als geschlossenes Hydrauliksystem ausgebildet sein.

Erfindungsgemäß kann die Hydraulikgebervorrichtung eine Einstellungseinrichtung aufweisen. Die Einstellungseinrichtung kann einen beispielsweise durch Belagverschleiß entstandenen größeren Leerweg ausgleichen bzw. den Leerweg einstellen. Die Einstellungsvorrichtung kann dabei an dem Lenkerende vorgesehen sein und beispielsweise in die Hydraulikgebervorrichtung tiefer einbringbar sein, beispielsweise über eine Schraubverbindung. Dabei kann eine Verstellschraube tiefer in die Hydraulikgebervorrichtung einschraubbar angeordnet sein, um die Ein- bzw. Nachstellung zu bewirken. Dabei kann sich der Kolben der Hydraulikgebervorrichtung bis zum Lenkerende erstrecken und/oder durch die Einstelleinrichtung verschlossen werden. In der Einstelleinrichtung kann eine Entlüftungseinrichtung angeordnet sein.

Erfindungsgemäß kann der Hebel ein Kraftübertragungsglied und die Hydraulikgebervorrichtung einen Einsatz zum Einstecken in ein Lenkerrohr aufweisen, der ein erstes Ende, an dem ein Geberzylinder mit einem Druckraum angeordnet ist, und eine Eingriffsöffnung für den Eingriff des Kraftübertragungsglieds umfasst.

Diese Ausführung hat den Vorteil, dass die Hydraulikgebervorrichtung einfach in dem Lenkerrohr montiert werden kann, indem der Einsatz mit dem Geberzylinder in dem Lenkerrohr angeordnet wird, in dem eine der Eingriffsöffnung entsprechende Öffnung vorgesehen ist. Der Bremshebel kann dann aussen an dem Lenkerrohr bzw. an geeigneten Befestigungsmitteln des Lenkerohrs beispielsweise entsprechend einer der oben genannten Varianten montiert werden, wobei das Kraftübertragungsteil durch die Eingriffsöffnung in den Einsatz derart eingreift bzw. angeordnet wird, dass eine Kraftübertragung auf den Kolben des Geberzylinders möglich ist.

Erfindungsgemäß kann das Kraftübertragungsteil ein Fortsatz des Hebels und oder eines optionalen Druckstücks sein.

Erfindungsgemäß kann eine Leerwegeinstelleinrichtung vorgesehen sein. Die Leerwegeinstelleinrichtung kann derart ausgebildet und angeordnet sein, dass sie den Winkel zwischen Hebel und Aufnahme verstellt, um den Kolben in dem Einsatz zu verschieben. Alternativ oder zusätzlich kann die Leerwegeinstelleinrichtung derart ausgebildet und angeordnet sein, dass sie den Kolben in dem Einsatz über eine mechanische Fernsteuereinrichtung verschiebt. Die Fernsteuereinrichtung kann eine Verbindungseinrichtung, beispielsweise eine Stange, und eine Einstelleinrichtung, beispielsweise eine Dreheinrichtung, umfassen, die am Lenkerende des Einsatzes angeordnet ist. Dabei kann die Einstelleinrichtung mit einem Gestänge mit dem Kolben verbunden sein. Das Gestänge kann in einem Gewinde in dem Kolben angeordnet sein, der gegen Drehung in dem Einsatz gesichert sein kann. Durch Drehen der Einstelleinrichtung kann der Kolben auf dem Aussengewinde der Stange bzw. des Gestänges axial in dem Einsatz verschoben werden, so dass sich der Leerweg verstellt. Die Einstelleinrichtung kann einen Eingriff zum einfachen Einstellen aufweisen. Ein Reibelement kann vorgesehen werden, um ein selbständiges Verstellen zu behindern.

Erfindungsgemäß kann in dem Einsatz ein bzw. der Ausgleichsraum vorgesehen sein.

Erfindungsgemäß kann der Hebel entlang der axialen Erstreckung des Lenkerrohrs bzw. des Einsatzes zwischen einem bzw. dem in dem Einsatz angeordneten Ausgleichsraum und dem Geberyzlinder angeordnet sein.

Erfindungsgemäß kann eine Anschlageinrichtung vorgesehen sein, mit der die Endlage des Kolbens definiert werden kann.

Bei den Ausführungen mit Ausgleichsraum kann die Verbindung zwischen dem Druckraum des Geberzylinders und dem Ausgleichsraum über das Zentralventil erfolgen. Dabei kann das Kraftübertragungsteil gabelförmig und/oder mit zwei parallelen Fortsätzen versehen sein, zwischen denen die Verbindung zwischen dem Druckraum und dem Ausgleichsraum angeordnet ist.

Erfindungsgemäß wird auch eine hydraulische Bremse bzw. hydraulische Kupplung bzw. hydraulische Fahrradbremse angegeben, wobei die hydraulische Bremse bzw. hydraulische Kupplung bzw. hydraulische Fahrradbremse eine oder mehrere der oben genannten erfindungsgemäßen Hydraulikgebervorrichtungen aufweist.

Erfindungsgemäß kann die hydraulische Fahrradbremse eine Scheibenbremse bzw. eine Felgenbremse sein.

Erfindungsgemäß kann die hydraulische Bremse Komponenten umfassen, die es unterstützen, dass die Hydraulikleitung zur Verbindung der Gebervorrichtung der hydraulischen Bremse mit der Nehmervorrichtung der hydraulischen Bremse in dem Rahmen des Fahrzeugs verlegt werden kann.

Diese Komponenten können eine Hülse umfassen, die zwischen dem Lenkervorbau und dem Gabelschaft angeordnet werden kann.

Erfindungsgemäß kann die Hülse exzentrisch ausgebildet sein. Dabei kann der Aufnahmeabschnitt der Hülse für die Aufnahme des Gabelsschafts außermittig angeordnet sein, um mehr Platz für die Führung der Leitungen zu schaffen. Diese Ausführung ist besonders vorteilhaft für Ausführungen, in denen die Leitungen außerhalb des Gabelschaftes verlaufen sollen.

Erfindungsgemäß kann die Hülse einteilig ausgebildet sein. Dabei können in der Hülse zwei oder mehr Aussparungen vorgesehen sein, durch die die Leitungen geführt bzw. in denen die Leitungen angeordnet werden können. Die Aussparungen können an der Innenseite ausgebildet sein.

Alternativ oder zusätzlich können die Aussparungen an der Außenseite der Hülse vorgesehen sein. Alternativ oder zusätzlich können die Aussparungen an der Oberseite der Hülse an der Außenseite der Hülse und an der Unterseite der Hülse an der Innenseite der Hülse angeordnet sein. Zusätzlich oder alternativ können die Aussparungen als Bohrungen ausgebildet sein.

Erfindungsgemäß kann die Hülse zweiteilig oder mehrteilig ausgebildet sein. Dabei können die Aussparungen wie bei der einteiligen Hülse ausgebildet sein. Dabei können die Aussparungen in den verschiedenen Teilen der Hülse unterscheidlich ausgebildet sein.

Erfindungsgemäß kann die Hülse einen Schlitz aufweisen. Der Schlitz kann dabei bei einer exzentrischen Ausbildung der Hülse vorzugsweise in dem Bereich ausgebildet sein, in dem die Hülse einen geringere Wandstärke aufweist, bzw. in dem Bereich ausgebildet sein der den Aussparungen für die Leitungsdurchführung gegenüberliegt.

Erfindungsgemäß kann eine Leitungsführungseinrichtung vorgesehen sein. Dabei kann die Leitungsführungseinrichtung derart ausgebildet und angeordnet sein, dass die Leitungen von dem Gabelschaft weg geleitet werden. Erfindungsgemäß kann die Leitungsführungseinrichtung unter der Hülse angeordnet sein.

Erfindungsgemäß kann die Leitungsführungseinrichtung auch in der Hülse integriert sein.

Erfindungsgemäß können die Aussparungen derart in der Hülse ausgebildet und angeordnet sein, dass die Leitungen nach unten geführt werden können. Dabei können die Leitungen ausserhalb des Lenkerschafts angeordnet werden, so dass sie beispielsweise unten neben dem Lenkerschaft austreten können. Alternativ oder zusätzlich können die Aussparungen derart in der Hülse ausgebildet und angeordnet sein, dass die Leitungen nach oben geführt werden können. Dabei können die Leitungen ausserhalb des Lenkerschafts angeordnet werden und dann von oben in den Lenkerschaft eintreten, so dass sie beispielsweise unten aus dem Lenkerschaft herausgeführt werden können.

Die Erfindung wird im Folgenden anhand der in den Figuren gezeigten Ausführungsbeispiele ohne Beschränkung des allgemeinen Erfindungsgedankens näher beschrieben. Dabei bezeichnen bei den verschiedenen Ausführungsbeispielen gleiche Bezugszeichen gleiche oder sich entsprechende Bauteile bzw. Merkmale. Auf die Beschreibung der anderen Ausführungsbeispiele der Erfindung wird jeweils verwiesen und der Schwerpunkt wird auf die Unterschiede zu den anderen Ausführungsbeispielen gelegt. Dabei werden folgende Bezugszeichen verwendet:
- 1: Gebervorrichtung
- 10: Hebel
- 11: Armabschnitt
- 20: Lenkerrohr
- 21: Öffnung
- 22: Öffnung
- 23: Öffnung
- 30: Griffrohr
- 32: Schraube
- 33: Schraube
- 40: Aufnahme
- 41: Drehachse
- 41A: Drehachse
- 41B: Drehachse
- 42: Schelle
- 43: Adapter für Schalteinheit
- 44: Griffweitenverstelleinrichtung
- 45: Lasche
- 46: Schraube
- 47: Aufnahme
- 50: Druckstück
- 50A: Druckstückabschnitt
- 50B: Druckstück
- 51A: Arm
- 51B: Armabschnitt
- 53: Drehachse
- 54: Drehachse
- 55: Vorsprung
- 56: Fortsatz
- 57: Fortsatz
- 60: Verschiebeeinrichtung
- 61: Durchgang
- 62: Durchgang
- 63: Steg
- 64: Nut
- 65: Aufnahme
- 66: Kontur
- 67: Klemmeinrichtung
- 671: Kontur
- 70: Zugeinrichtung
- 71: Kopf
- 71A: Verstelleinrichtung
- 71B: Verbindungseinrichtung
- 711: Verriegelungseinrichtung
- 72: Hauptkörper
- 73: Verschraubung
- 73A: Kolben
- 73B: Kolben
- 73C: Kolben
- 731: Stutzen
- 74: Schraube
- 75: Hydraulikkanal
- 76: Öffnung
- 80: Geberzylinder
- 81: Rückstellfeder
- 811: Buchse
- 812: Scheibe
- 82: Druckraum
- 83: Primärdichtung
- 84: Dichtung
- 85: Druckleitung
- 86: Fortsatz
- 90: Ausgleichsraum
- 91: Balg
- 911: Wulst
- 92: Deckel
- 93: Durchgang
- 94: Entlüftungsschraube
- 95: Konus
- 96: Überlaufkanal
- 97: Dichtung
- 98: Entlüftungsbohrung
- 99: Einstelleinrichtung
- 100: Hydraulikleitung
- 101: Klemmschraube
- 102: Anschlussstutzen
- 110: Rahmen
- 111: Abflachung
- 120: Ausgleichsgehäuse
- 121: Abflachung
- 122: Schnappeinrichtung
- 123: Schnappeinrichtung
- 124: Stirnwand
- 125: Stirnwand
- 126: Steg
- 130: Sensoreinrichtung
- 131: Magnet
- 132: Hallsensor
- 140: Anzeige
- 150: Ausgleichsabschnitt
- 151: Steg
- 152: Vorsprung
- 160: Anzeigeabschnitt
- 161: Dichtung (z.B. O-Ring)
- 162: Durchgang
- 163: Stirnwand
- 164: Markierung
- 165: Markierung
- 166: Bereich
- 170: Sensoreinrichtung
- 171: Magnet
- 172: Sensor (z.B. Hallsensor, Reedkontakt, etc.)
- 173: Aufnahme (für Signalgeber, z.B. Magnet, etc.)
- 200: Exzentereinrichtung
- 201: Dreheinrichtung
- 202: Anlenkaufnahme
- 203: Hebelaufnahme
- 204: Befestigungseinrichtung
- 300: Drehgriffeinrichtung (z.B. E-Gasbetätigung, Gasbetätigung, Kupplungsbetätigung)
- 400: Schutzvorrichtung (z.B. Handschutzvorrichtung bzw. Handguard)
- 410: außenliegender Bereich
- 420: innenliegender Bereich
- 430: Klemmbereich500 Schalteinrichtung501 Sensor (z.B. Hallsensor, Reedkontakt, etc.)
- 502: Aufnahme (z.B. Kabelbinder, etc.)
- 503: Aufnahme (für Signalgeber, z.B. Magnet, etc.)
- 504: Aussparung
- 600: Entlüftungsventil
- 601: Aufnahme
- 700: Einsatz
- 710: Geberzylinder
- 720: Eingrifföffnung
- 730: Wartungsöffnung
- 740: Leerwegeinstelleinrichtung
- 750: Zentralventil
- 751: Ventilfeder
- 752: Dichtung
- 760: Dichtung
- 770: Leitung
- 800: Leerwegeinstelleinrrichtung (bzw. mechanische Fernsteuereinrichtung)
- 810: Einstelleinrichtung
- 820: Verbindungseinrichtung
- 830: Hemmeinrichtung
- 900: Anschlageinrichtung (für Kolbenendlage)
- 910: Fortsatz
- 1000: Hülse
- 1001: Unterteil
- 1002: Oberteil
- 1010: Aussparung
- 1020: Ausnehmung
- 1030: Bund
- 1040: Schlitz
- 1050: Verbindungseinrichtung
- 1051: Aussparung
- 1052: Aussparung
- 1100: Leitungsführungseinrichtung
- 1110: Aussparung
- 1130: Bund
- 1200: Gabelschaft
- 1300: Lenkervorbau
- 1320: Ausnehmung

### Kurzbeschreibung der Figuren:

- Fig. 1: zeigt eine Schnittansicht durch eine erste Ausführung einer Hydraulikgebervorrichtung gemäß einer Ausführung der Erfindung.
- Fig. 2: zeigt eine Seitenansicht der Hydraulikgebervorrichtung von Fig. 1.
- Fig. 3: zeigt eine Außenansicht eines Lenkerrohrs für die Hydraulikgebervorrichtung von Fig. 1.
- Fig. 4: zeigt eine Seitenansicht des Lenkerrohrs von Fig. 3.
- Fig. 5: zeigt eine Seitenansicht einer Verschiebeeinrichtung für die Hydraulikgebervorrichtung von Fig. 1.
- Fig. 6: zeigt eine Ansicht der Verschiebeeinrichtung von Fig. 5 von oben.
- Fig. 7: zeigt eine Ansicht der Verschiebeeinrichtung von Fig. 5 von dem Ende des Lenkerrohrs aus gesehen in Richtung der Mitte des Lenkerrohrs in einem Lenkerrohr.
- Fig. 8: zeigt eine Seitenansicht eines Druckstücks für die Hydraulikgebervorrichtung von Fig. 1.
- Fig. 9: zeigt eine Ansicht des Druckstücks von Fig. 8 von der Lenkermitte aus gesehen.
- Fig. 10: zeigt eine Schnittansicht entsprechend Fig. 1 einer Hydraulikgebervorrichtung gemäß einer alternativen Ausführung der Erfindung.
- Fig. 11: zeigt eine Schnittansicht entsprechend Fig. 1 einer Hydraulikgebervorrichtung gemäß einer alternativen Ausführung der Erfindung.
- Fig. 12: zeigt eine Schnittansicht entsprechend Fig. 1 einer Hydraulikgebervorrichtung gemäß einer alternativen Ausführung der Erfindung.
- Fig. 13: zeigt eine Seitenansicht der Hydraulikgebervorrichtung von Fig. 12.
- Fig. 14: zeigt eine Schnittansicht entsprechend Fig. 1 einer Hydraulikgebervorrichtung gemäß einer alternativen Ausführung der Erfindung.
- Fig. 15: zeigt eine Seitenansicht der Hydraulikgebervorrichtung von. 14.
- Fig. 16: zeigt eine Schnittansicht entsprechend Fig. 1 einer Hydraulikgebervorrichtung gemäß einer alternativen Ausführung der Erfindung.
- Fig. 17: zeigt eine Seitenansicht der Hydraulikgebervorrichtung von Fig. 16.
- Fig. 18: zeigt eine Schnittansicht entsprechend Fig. 1 einer Hydraulikgebervorrichtung gemäß einer alternativen Ausführung der Erfindung.
- Fig. 19: zeigt eine Seitenansicht der Hydraulikgebervorrichtung von Fig. 18.
- Fig. 20: zeigt eine Ansicht der Hydraulikgebervorrichtung von Fig. 10 bzw. Fig. 1 vom Lenkerende aus gesehen.
- Fig. 21: zeigt eine vergrößerte Teilansicht der Schnittansicht von Fig. 12.
- Fig. 22: zeigt eine Schnittansicht entsprechend Fig. 1 einer Hydraulikgebervorrichtung gemäß einer alternativen Ausführung der Erfindung.
- Fig. 23: zeigt eine Schnittansicht entsprechend Fig. 1 einer Hydraulikgebervorrichtung gemäß einer alternativen Ausführung der Erfindung.
- Fig. 24: zeigt eine Seitenansicht der Hydraulikgebervorrichtung von Fig. 23.
- Fig. 25: zeigt eine Schnittansicht entsprechend Fig. 1 einer Hydraulikgebervorrichtung gemäß einer alternativen Ausführung der Erfindung.
- Fig. 26: zeigt eine Ansicht der Hydraulikgebervorrichtung von Fig. 25 vom Lenkerende aus gesehen.
- Fig. 27: zeigt eine Schnittansicht der Hydraulikgebervorrichtung von Fig. 25.
- Fig. 28: zeigt eine Schnittansicht der Hydraulikgebervorrichtung von Fig. 25.
- Fig. 29: zeigt eine vergrößerte Teilansicht der Schnittansicht von Fig. 28.
- Fig. 30: zeigt eine Seitenansicht eines Rahmens für die Hydraulikgebervorrichtung von Fig. 25.
- Fig. 31: zeigt eine Ansicht des Rahmens von Fig. 30 von dem Lenkerende aus gesehen.
- Fig. 32: zeigt eine Seitenansicht eines Ausgleichsgehäuses für die Hydraulikgebervorrichtung von Fig. 25.
- Fig. 33: zeigt eine Ansicht des Ausgleichsgehäuses von Fig. 32 von dem Lenkerende aus gesehen.
- Fig. 34: zeigt eine vergrößerte Teilansicht der Ansicht von Fig. 33.
- Fig. 35: zeigt eine Seitenansicht eines alternativen Ausgleichsgehäuses für eine Hydraulikgebervorrichtung entsprechend der von Fig. 25.
- Fig. 36: zeigt eine Ansicht des Ausgleichsgehäuses von Fig. 35 von der in Fig. 35 linken Seite aus gesehen.
- Fig. 37: zeigt eine Schnittansicht des Ausgleichsgehäuses von Fig. 35 in der Schnittebene, die in Fig. 36 mit den Pfeilen XXXVII gekennzeichnet ist.
- Fig. 38: zeigt eine Ansicht des Ausgleichsgehäuses von Fig. 35 von oben.
- Fig. 39: zeigt eine Seitenansicht des Anzeigeabschnitts des Ausgleichsgehäuses von Fig. 35.
- Fig. 40: zeigt eine Schnittansicht des Anzeigeabschnitts von Fig. 39 entsprechend der Schnittebene von Fig. 37.
- Fig. 41: zeigt eine Ansicht des Anzeigeabschnitts von Fig. 39 von dem Lenkerende aus gesehen.
- Fig. 42: zeigt eine Ansicht des Anzeigeabschnitts von Fig. 39 von dem Ausgleichsabschnitt des Ausgleichsgehäuses aus gesehen.
- Fig. 43: zeigt eine Schnittansicht einer Hydraulikgebervorrichtung mit einem Ausgleichsgehäuse gemäß den Figuren 35 bis 42 für den Einbau in einem Lenkerrohr eines lenkergeführten Fahrzeugs, wobei der Schnitt entsprechend der Schnittebene von Fig. 37 verläuft.
- Fig. 44: zeigt eine Seitenansicht der Hydraulikgebervorrichtung von Fig. 43.
- Fig. 45: zeigt eine Seitenansicht der Hydraulikgebervorrichtung von Fig. 43.
- Fig. 46: zeigt Detailansicht einer Exzentereinrichtung für eine Hydraulikgebervorrichtung gemäß der Erfindung.
- Fig. 47: zeigt eine Detailansicht einer Exzentereinrichtung für eine Hydraulikgebervorrichtung gemäß der Erfindung.
- Fig. 48: zeigt eine Detailansicht einer Füllstandssensorvorrichtung für eine Hydraulikgebervorrichtung gemäß der Erfindung.
- Fig. 49: zeigt eine Ansicht einer Hydraulikgebervorrichtung gemäß der Erfindung mit einer Drehgriffeinrichtung.
- Fig. 50: zeigt eine Ansicht einer Aufnahme für eine Hydraulikgebervorrichtung gemäß der Erfindung von der Unterseite des Hebels aus gesehen, wobei nur der Hebel und die Hebelhalterung dargestellt sind.
- Fig. 51: zeigt eine Seitenansicht der Aufnahme von Fig. 50, d.h. in einer Richtung entlang des nicht dargestellten Lenkerrohrs.
- Fig. 52: zeigt eine Seitenansicht der Aufnahme von Fig. 50, d.h. entsprechende einer Seitenansicht des nicht dargestellten Lenkerrohrs.
- Fig. 53: zeigt eine Ansicht einer Schutzvorrichtung einer Hydraulikgebervorrichtung gemäß einer Ausführung der Erfindung.
- Fig. 54: zeigt eine Ansicht einer Schutzvorrichtung einer Hydraulikgebervorrichtung gemäß einer Ausführung der Erfindung.
- Fig. 55: zeigt eine Ansicht einer Hydraulikgebervorrichtung gemäß einer Ausführung der Erfindung mit einer Schaltereinrichtung.
- Fig. 56: zeigt eine Ansicht einer Hydraulikgebervorrichtung gemäß einer Ausführung der Erfindung mit einer Schaltereinrichtung.
- Fig. 57: zeigt eine Schnittansicht der Hydraulikgebervorrichtung von Fig. 56.
- Fig. 58: zeigt eine Detailansicht des Sensors der Schaltereinrichtung der Figuren 55 und 56.
- Fig. 59: zeigt eine Ansicht des Sensors von Fig. 58 von der bezogen auf Fig. 58 linken Seite.
- Fig. 60: zeigt eine Ansicht des Sensors von Fig. 58 von unten.
- Fig. 61: zeigt eine perspektivische Ansicht einer Hydraulikgebervorrichtung gemäß einer Ausführung der Erfindung, die an einem Lenkerstummel angeordnet ist.
- Fig. 62: zeigt eine weitere perspektivische Ansicht der Hydraulikgebervorrichtung von Fig. 61.
- Fig. 63: zeigt eine weitere perspektivische Ansicht der Hydraulikgebervorrichtung von Fig. 61.
- Fig. 64: zeigt eine Ansicht einer Hydraulikgebervorrichtung gemäß einer Ausführung der Erfindung.
- Fig. 65: zeigt eine Ansicht einer Hydraulikgebervorrichtung gemäß einer Ausführung der Erfindung.
- Fig. 66: zeigt eine vergrößerte Detailansicht der Hydraulikgebervorrichtung von Fig. 65.
- Fig. 67: zeigt eine Seitenansicht der Hydraulikgebervorrichtung von Fig. 65 in Richtung des Lenkerendes.
- Fig. 68: zeigt eine Ansicht einer Hydraulikgebervorrichtung.
- Fig. 69: zeigt eine Ansicht einer Hydraulikgebervorrichtung.
- Fig. 70: zeigt eine vergrößerte Detailansicht der Hydraulikgebervorrichtung von Fig. 69.
- Fig. 71: zeigt eine vergrößerte Detailansicht der Hydraulikgebervorrichtung von Fig. 69.
- Fig. 72: zeigt eine Schnittansicht der Hydraulikgebervorrichtung von Fig. 69 von oben in Richtung des unteren Teils der Schelle bzw. Aufnahme.
- Fig. 73: zeigt eine Ansicht einer Hydraulikgebervorrichtung.
- Fig. 74: zeigt eine Seitenansicht der Hydraulikgebervorrichtung von Fig. 73 in Richtung des Lenkerendes.
- Fig. 75: zeigt eine Ansicht einer Hydraulikgebervorrichtung.
- Fig. 76: zeigt eine Ansicht einer Hydraulikgebervorrichtung.
- Fig. 77: zeigt eine Ansicht einer Hydraulikgebervorrichtung gemäß einer Ausführung der Erfindung.
- Fig. 78: zeigt eine vergrößerte Detailansicht der Hydraulikgebervorrichtung von Fig. 77.
- Fig. 79: zeigt eine Ansicht einer Hydraulikgebervorrichtung gemäß einer Ausführung der Erfindung.
- Fig. 80: zeigt eine vergrößerte Detailansicht der Hydraulikgebervorrichtung von Fig. 79.
- Fig. 81: zeigt eine perspektivische Ansicht eines Lenkervorbaus mit einer Hülse und einer Leitungsführungseinrichtung für eine hydraulische Bremse gemäß einer Ausführung der Erfindung.
- Fig. 82: zeigt eine Schnittansicht durch den Lenkervorbau von Fig. 81.
- Fig. 83: zeigt eine perspektivische Ansicht der Hülse und der Leitungsführungseinrichtung von Fig. 81.
- Fig. 84: zeigt eine perspektivische Ansicht eines Lenkervorbaus mit einer Hülse für eine hydraulische Bremse gemäß einer Ausführung der Erfindung.
- Fig. 85: zeigt eine Schnittansicht durch den Lenkervorbau von Fig. 84.
- Fig. 86: zeigt eine perspektivische Ansicht der Hülse von Fig. 84.
- Fig. 87: zeigt eine perspektivische Ansicht des Oberteils der Hülse von Fig. 86.
- Fig. 88: zeigt eine perspektivische Ansicht des Unterteils der Hülse von Fig. 86.
- Fig. 89: zeigt eine perspektivische Ansicht eines Lenkervorbaus mit einer Hülse für eine hydraulische Bremse gemäß einer Ausführung der Erfindung.
- Fig. 90: zeigt eine Schnittansicht durch den Lenkervorbau von Fig. 89.
- Fig. 91: zeigt eine perspektivische Ansicht der Hülse von Fig. 89.
- Fig. 92: zeigt eine Schnittansicht durch einen Lenkervorbaus mit einer Hülse für eine hydraulische Bremse gemäß einer Ausführung der Erfindung.
- Fig. 93: zeigt eine perspektivische Ansicht der Hülse von Fig. 92.

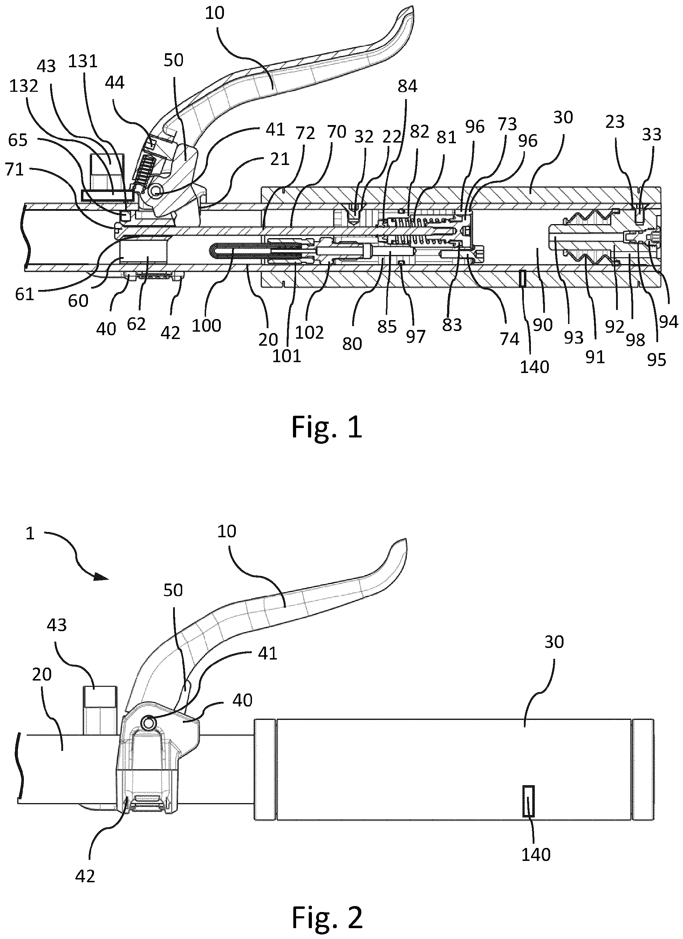

Die Figuren 1 bis 9 zeigen eine erste Ausführung einer hydraulischen Gebervorrichtung gemäß einer Ausführung der Erfindung.

Die hydraulische Gebervorrichtung 1 ist eine Gebervorrichtung einer hydraulischen Fahrradbremse, beispielsweise einer hydraulischen Bremse bzw. einer hydraulischen Scheibenbremse oder hydraulischen Felgenbremse. Dargestellt ist nur die hydraulische Gebervorrichtung und die Hydraulikleitung 100, die zu der nicht dargestellten hydraulischen Nehmervorrichtung führt und deren Aufbau dem Fachmann bekannt ist.

Die hydraulische Gebervorrichtung 1 umfasst einen Hydraulikzylinder 80, der in dem Lenkerrohr 20 des lenkergeführten Fahrzeuges integriert ist.

Das Lenkerrohr 20 umfasst eine Öffnung 21, durch die ein Druckstück 50 verläuft, das drehgelenkig an einer Aufnahme 40 angeordnet ist, die an dem Lenkerrohr 20 befestigt ist.

Die hydraulische Gebervorrichtung 1 umfasst einen Hebel 10, der an der Aufnahme 40 drehgelenkig angeordnet ist. Die Drehachse 41 für das Druckstück 50 und den Hebel 10 ist bei der dargestellten Ausführung identisch.

Des Weiteren ist eine Griffweitenverstelleinrichtung 44 vorgesehen, mit der die Anfangsstellung des Hebels 10 in der Ruhestellung verändert werden kann. Die Aufnahme 40 ist mit einer Schelle 42 an dem Lenkerrohr 20 befestigt. Ein optionaler Adapter 43 ist an der Schelle 42 vorgesehen, um eine nicht dargestellte Schalteinrichtung aufnehmen zu können.

In dem Lenkerrohr 20 ist eine Verschiebeeinrichtung 60 vorgesehen, die in dem Lenkerrohr 20 entlang der Längsrichtung des Lenkerrohrs 20 verschiebbar angeordnet ist. Die Verschiebeeinrichtung 60 kann als Kulisse ausgebildet sein. Die Verschiebeeinrichtung 60 umfasst einen Durchgang 61, in dem eine Zugeinrichtung 70 aufgenommen ist, und einen Durchgang 62, durch den die Hydraulikleitung 100 verläuft.

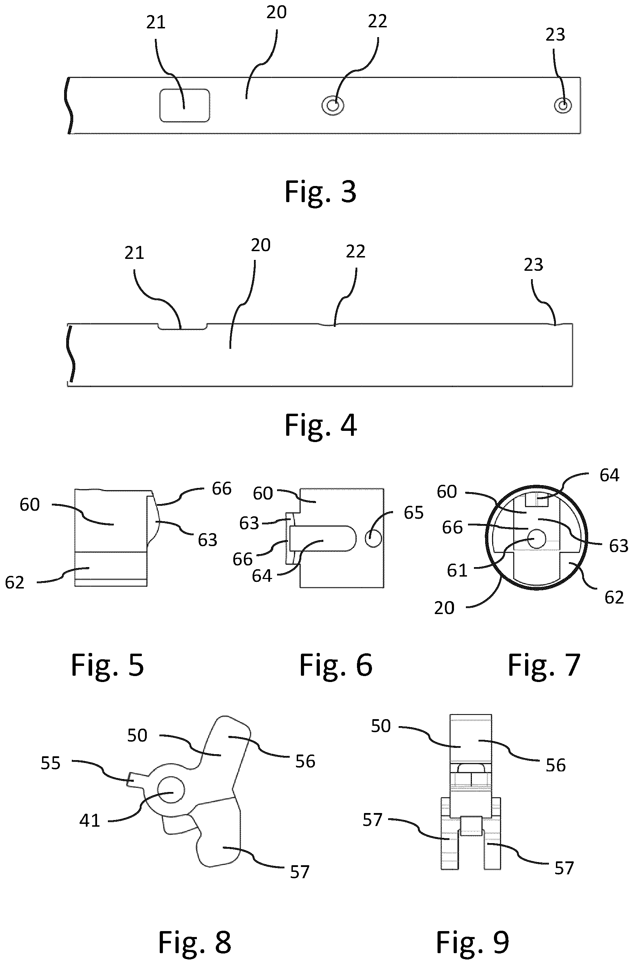

Die Fig. 5 bis 7 zeigen die Verschiebeeinrichtung 60 und die Figuren 8 bis 9 zeigen das Druckstück 50. Durch die im Folgenden beschriebene Ausgestaltung ist die Verschiebeeinrichtung 60 in dem Lenkerrohr 20 gegen ein Verdrehen gesichert. Eine Verdrehsicherung kann deshalb wichtig sein, weil die Hydraulikleitung 100 infolge von Verwindungen bei der Montage ein Drehmoment auf die Verschiebeeinrichtung 60 insbesondere dann ausüben könnte, wenn die Hydraulikleitung durch den Durchgang 62 verlegt wird.

Zur Verdrehsicherung weist die Verschiebeeinrichtung 60 weist einen Steg 63, der von zwei Fortsätze 57 des Druckstücks 50 aufgenommen wird. Dadurch wird erreicht, dass sich die Verschiebeeinrichtung 60 gegenüber dem Druckstück 50 nicht in Umfangsrichtung des Lenkerrohrs 20 verdrehen kann.

Die Verschiebeeinrichtung 60 umfasst eine Nut 64, in die das Druckstück 50 bei der Betätigung der Hydraulikeinheit eintauchen kann.

Bei der Betätigung des Hebels 10 wird das Druckstück 50 um die Drehachse 41 gedreht und verschiebt die Verschiebeeinrichtung 60 in Richtung Fahrzeugmitte, d.h. in Figur 1 nach links. Bei der dargestellten Ausführung ist die Zugeinrichtung 70 als Zugstange ausgebildet. Die Zugeinrichtung 70 weist einen Kopf 71 auf, an dem die Verschiebeeinrichtung 60 angreift und die Zugeinrichtung 70 bei der Betätigung des Hebels 10 nach links verschiebt. Die Zugeinrichtung 70 weist einen Hauptkörper 72 und eine Verschraubung 73 auf. Die Verschraubung 73 wirkt als Kolben der Gebervorrichtung 1 und ist in dem Hydraulikzylinder 80 angeordnet. Sie wird mit einer Schraube 74 gesichert. Bei der Betätigung des Hebels 10 wird die Schraube 74 entgegen der Kraft einer Rückstellfeder 81 nach links gedrückt. Die Rückstellfeder 81 ist in dem Druckraum 82 des Geberzylinders 80 angeordnet.

Rechts von dem Geberzylinder 80 ist ein Ausgleichsbehälter 90 bzw. Vorratsbehälter für Hydraulikfluid vorgesehen. Der Ausgleichsbehälter 90 wird nach außen durch das Griffrohr 20 begrenzt. Zum Lenkerende ist der Ausgleichsbehälter durch einen Deckel 92 mit einem Balg 91 begrenzt. Der Balg 91 trennt das Hydraulikfluid in dem Ausgleichsbehälter 90 von einem Gas bzw. Luftvolumen zum Ausgleich von in den Druckraum nachströmenden Hydraulikfluid. Bei den Ausführungen mit einem Luftvolumen innerhalb des Balgs ist dieses über eine Entlüftungsbohrung 98 mit der Außenluft verbunden. In dem Deckel 92 ist eine Öffnung 93 mit einer Entlüftungsschraube 94 vorgesehen. In der Öffnung 93 ist ein Konus 95 vorgesehen, damit eine handelsübliche Spritze eingeführt werden kann, um Hydraulikfluid in den Ausgleichsbehälter einbringen bzw. daraus abziehen zu können. Der Deckel 92 ist mit einer Schraube 33 gegen Drehung gesichert, die in einer Öffnung 23 in dem Griffrohr 20 angeordnet ist und in die Verschraubung 73 geschraubt ist.

Außerhalb des Lenkerrohrs 20 ist ein Griffrohr 30 vorgesehen, das beispielsweise aus einem elastischen Gummimaterial ausgebildet sein kann.

Der Zylinder 80 ist in dem Lenkerrohr 20 gegen Verrutschen und Drehung durch eine Schraube 32 gesichert, die in einer Öffnung 22 in dem Griffrohr angeordnet und in den Geberzylinder 80 geschraubt ist.

Der Ausgleichsbehälter 90 ist mit dem Druckraum 82 über einen Überlaufkanal 96 verbunden. An der Verschraubung 73 ist eine Primärdichtung 83 vorgesehen, die bei der Betätigung der Bremse den Überlaufkanal überfährt und den Druckraum 82 von dem Ausgleichsbehälter 90 trennt, so dass sich Druck in dem Druckraum 82 aufbauen kann.

Der Ausgleichsbehälter 90 ist gegenüber dem Innenraum des Lenkerrohrs 20 über eine Dichtung 97 abgedichtet, die zwischen dem Lenkerrohr 20 und dem Geberzylinder 80 angeordnet ist.

Eine weitere Dichtung 84 ist auf der Zugeinrichtung 70 vorgesehen und dichtet den Druckraum 82 gegen den Hauptkörper 72 der Zugeinrichtung 70 ab.

Bei der Betätigung der hydraulischen Gebervorrichtung 1 wird der Hebel 10 nach unten gedrückt, wodurch sich das Druckstück 50 um die Drehachse 41 entgegen der Verschiebeeinrichtung 60 bewegt wird und diese nach links schiebt. Dadurch wird die Zugeinrichtung 70 nach links bewegt und zieht den Kolben, d.h. bei dem Ausführungsbeispiel die Verschraubung 73, in den Hydraulikzylinder 80 (in Fig. 1 nach links). Dadurch baut sich ein Druck in dem Druckraum 82 auf und Hydraulik wird in die Hydraulikleitung 100 gepresst, die mit dem nicht dargestellten Hydrauliknehmer verbunden ist.

Die Verschiebeeinrichtung 60 weist an dem Steg eine Kontur 66, über dessen Form je nach Wunsch ein progressiver und/oder degressiven Verlauf des Übersetzungsverhältnisses eingestellt werden kann. Wie in Fig. 5 gezeigt, ist die Kontur 66 des Stegs 63 im oberen Teil relativ weit rechts, geht noch ein wenig weiter nach rechts. Anschließend verjüngt sich der Steg 63, so dass die Kontur weiter links verläuft. Das hat zur Folge, dass das Übersetzungsverhältnis nicht ganz so stark bei zunehmender Betätigung abnimmt, wie bei einer Ausführung mit gerader Kontur. Das ist bei den Ausführungen der Erfindung vorteilhaft, die einen sehr niedrigen Drehpunkt haben, der ein hohes Übersetzungsverhältnis bedingt, das am Anfang der Betätigung unerwünscht ist, weil das Lüftspiel nahezu kraftfrei schnell, d.h. mit einem niedrigen Übersetzungsverhältnis, überfahren werden soll. Erst bei Druckaufbau ist ein hohes Übersetzungsverhältnis vorteilhaft. Durch die Kontur kann der Nachteil des niedrigen Drehpunkts zumindest teilweise ausgeglichen werden, so dass die Abnahme nicht so stark wie bei einer geraden Kontur ausfällt.

Die Hydraulikgebervorrichtung 1 weist eine Sensoreinrichtung 130 zum Erfassen der Stellung und/oder Betätigung der Hydraulikgebervorrichtung 1 auf. Das Signal der Sensorvorrichtung 130 kann beispielsweise dafür eingesetzt werden, die Betätigung der Hydraulikgebervorrichtung 1 anzuzeigen, indem das Aufleuchten eines Bremslichtes durch eine geeignete dem Fachmann bekannte Steuereinrichtung bewirkt wird. Alternativ oder zusätzlich kann das Erfassen der Stellung der Hydraulikgebervorrichtung 1 dazu benutzt werden, eine Rekuperationsvorrichtung einzuschalten, die das Bremsen unterstützt und gleichzeitig Energie in einen Speicher einspeist, der später zum Antrieb des Fahrzeugs verwendet werden kann. Die Rekuperationsvorrichtung kann beispielsweise eingeschaltet werden, sobald die Verbindung zwischen Druckraum 80 und Ausgleichsraum 90 unterbrochen wurde. Diese Funktion kann von dem Fahrer gezielt eingesetzt werden, um beispielsweise beim Bergabfahren eine reine Motorbremse durch die Rekuperation zu bewirken, und zwar bevor das Lüftspiel zwischen Bremsbelag und Bremsscheibe bzw. Felge vollständig überfahren worden ist.

Bei der Ausführung der Figuren 1 bis 9 umfasst die Sensoreinrichtung einen Wegsensor. In einer Aufnahme 65 der Verschiebeeinrichtung 60 ist ein Magnet 131 angeordnet. Am Lenkerrohr ist ein Hallsensor vorgesehen 132, der den Weg erfasst, den die Verschiebeeinrichtung 60 innerhalb des Lenkerrohrs 20 zurückgelegt hat. In Abhängigkeit der Geometrie des Geberzylinders wird die Verschiebeeinrichtung 60 zunächst von der Ruhestellung ca. 2-3 mm in das Lenkerrohr 20 verschoben, bis die Verbindung zwischen Druckraum 82 und dem Ausgleichsraum 90 unterbrochen wird. Bei der weiteren Betätigung wird die Verschiebeeinrichtung 60 weitere 5-6 mm in das Lenkerrohr 20 verschoben, wobei das Lüftspiel zwischen den Bremsbelägen und der Bremsscheibe bzw. der Felge überfahren wird. In diesem Bereich der Teilbetätigung, d.h. nach der Trennung zwischen Druckraum 82 und dem Ausgleichsraum 90, aber vor dem Überfahren des Lüftspiels zwischen den Bremsbelägen und der Bremsscheibe bzw. der Felge, d.h. vor dem Einsetzen der Bremswirkung, kann es vorteilhaft sein, bereits eine leichte Bremswirkung zu bewirken, wenn das Fahrzeug über einen Elektroantrieb verfügt. Das Signal der Sensoreinrichtung kann dann verwendet werden, die Rekuperation einzuschalten, die eine Bremswirkung umfasst und gleichzeitig die Bremsenergie in das System zurückführen kann, um den Energiespeicher aufzuladen. Auch bei einer Vollbetätigung mit einer Bremswirkung durch die Hydraulikvorrichtung kann eine Unterstützung der Bremse durch das Einschalten der Rekuperation vorteilhaft bzw. wünschenswert sein.

Zusätzlich oder alternativ zu der Sensoreinrichtung 130 zum Erfassen der Stellung und/oder Betätigung der Hydraulikgebervorrichtung 100 kann die Erfassung des Drucks in dem Druckraum 82 herangezogen werden. Beispielsweise kann die Rekuperationsvorrichtung eingeschaltet werden, sobald der Druck in dem Druckraum 82 einen bestimmten Schwellwert überschreitet. Das Überschreiten des Schwellwerts kann anzeigen, dass eine Bremswirkung durch die Hydraulikvorrichtung 1 erreicht wird. Auch dieser Wert kann beispielsweise verwendete werden, um ein Bremslicht anzuschalten bzw. bei unterschreiten eines etwas kleineren Schwellwerts wieder auszuschalten. Die Rekuperation kann ebenfalls bei Unterschreiten eines kleineren Schwellwerts ausgeschaltet werden, der etwas kleiner als der für das Einschalten verwendete Schwellwert ist. Alternativ oder zusätzlich kann das Ausschalten auch bei Erreichen der Ruhestellung bewirkt werden.

In dem Griffrohr 30 kann eine Anzeige 140 vorgesehen sein, um den Füllstand des Ausgleichsraums 90 anzuzeigen. Die Anzeige 140 kann über eine geeignete Leitung oder mehrere geeignete Leitungen mit dem Ausgleichsraum 90 verbunden sein und als durchsichtige bzw. durchscheinende Leitung ausgebildet sein, um den Füllstand anzuzeigen. Alternativ oder zusätzlich kann ein geeigneter Sensor den Füllstand im Ausgleichsraum erfassen und die Anzeige entsprechend ansprechen. In diesem Fall kann die Anzeige beispielsweise eine Reihe von optischen Anzeigen, beispielsweise LED-Lampen umfassen. Andere dem Fachmann bekannte und geeignete Anzeigen sind denkbar.

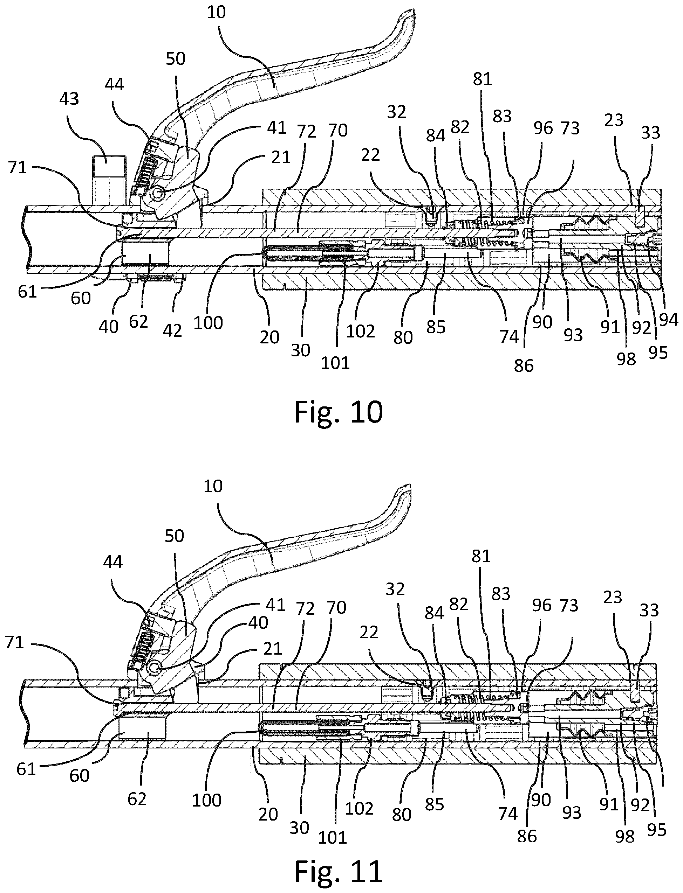

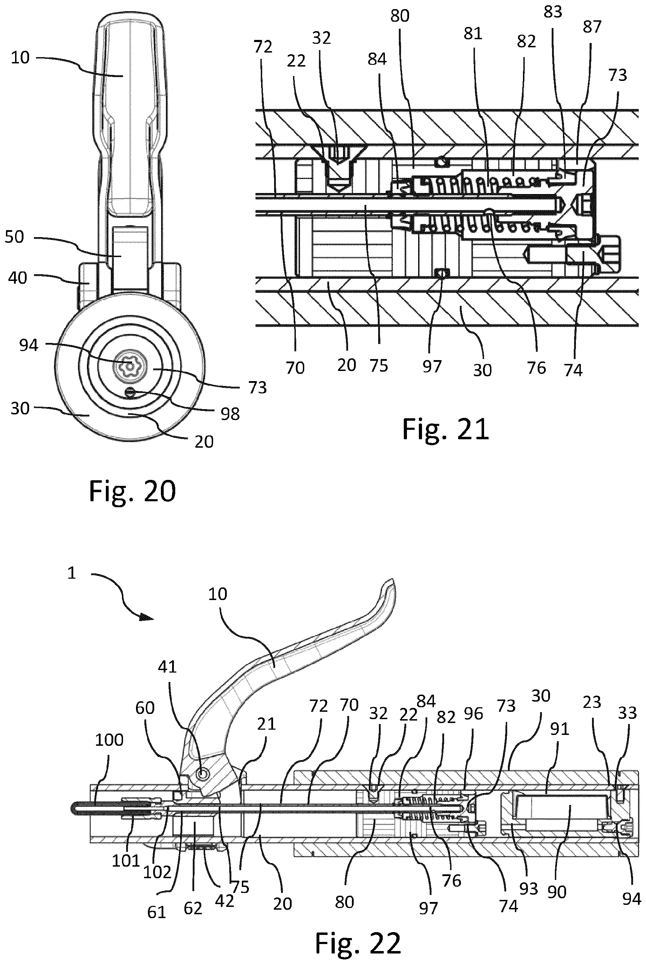

Fig. 10 und Fig. 20 zeigen eine alternative Ausführungsform der Erfindung, die im Wesentlichen der in den Figuren 1 bis 9 gezeigten Ausführungsform der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt. Das gilt für alle folgenden Ausführungsbeispiele der vorliegenden Erfindung auch in Bezug auf alle übrigen Ausführungsbeispiele dieser Offenbarung.

Der Geberzylinder 80 umfasst einen Fortsatz 86, der sich zum Ende des Lenkerrohrs 20 erstreckt und in dem der Ausgleichsbehälter 90 aufgenommen ist. Der Fortsatz 86 weist einen Außendurchmesser auf, der im Wesentlichen dem Innendurchmesser des Lenkerrohrs 20 entspricht. Da der Ausgleichsbehälter in dem Fortsatz 86 aufgenommen ist, kann die Dichtung 97 der in den Figuren 1 bis 3 gezeigten Ausführung entfallen. Diese Ausführung hat den Vorteil, dass sie als Einheit, die den Ausgleichsbehälter 90 umfasst, in ein Lenkerrohr eingebaut werden kann.

Fig. 11 zeigt eine alternative Ausführungsform der Erfindung, die im Wesentlichen den in den Figuren 1 bis 9 bzw. 10 und 20 gezeigten Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Die Aufnahme 40 ist in das Lenkerrohr 20 integriert. Die Schelle 42 und der Adapter entfallen somit. Die Schalteinheit kann auf eine dem Fachmann bekannte Weise auf dem Lenkerrohr 20 angebracht werden. Da die Hydraulikgebervorrichtung 1 erfindungsgemäß bis auf den Hebel 10 und damit verbundene Komponenten fast vollständig in dem Lenkerrohr 20 aufgenommen ist, ist ausreichend Platz für die Montage der Schalteinheit oder anderer Bauteile vorhanden.

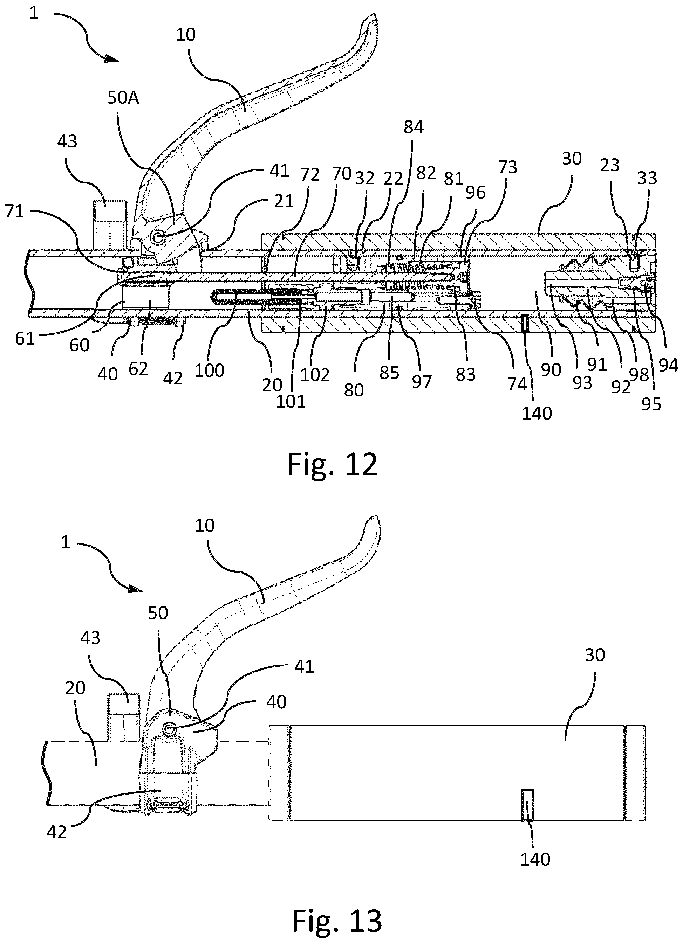

Fig. 12 und Fig. 13 zeigen eine alternative Ausführungsform der Erfindung, die im Wesentlichen der in den Figuren 1 bis 9 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Bei dieser Ausführung ist der Hebel 10 einteilig ausgebildet. Das Druckstück 50 der anderen Ausführungen ist in den Hebel 10 integriert. Der Hebel 10 wirkt mit seinem dem Druckstück entsprechenden Druckstückabschnitt 50A auf die Verschiebeeinrichtung 60 ein. Die Griffweiteneinstelleinrichtung 44 ist bei dieser Ausführung nicht vorhanden. Die Griffweite kann beispielsweise durch den Einsatz verschiedener Hebel oder auf andere dem Fachmann bekannte Weisen verändert werden.

Diese Ausführung hat ebenso wie die entsprechenden anderen Ausführungen der Erfindung, dass Beispielsweise die Griffweiteneinstellung dadurch erfolgen kann, dass die Aufnahme 40 mit dem Hebel 10 gegenüber der Verschiebeeinrichtung 60 verstellt bzw. verschoben wird, so dass sich die Griffweite wegen des Eingriffs zwischen dem Druckstückabschnitt 50A des Hebels 10 und der Verschiebeeinrichtung 60 verstellt. Dazu kann die Aufnahme 40 durch Lösen der Schelle 42 gelockert, dann entlang des Lenkerrohrs 20 in die gewünschte Stellung verschoben und schließlich durch Festziehen der Schelle 42 in der neuen Stellung fixiert werden.

Der Druckstückabschnitt 50A weist entsprechend der Ausführung der Figuren 1 bis 9 zwei Fortsätze 57 auf, die den Steg 63 zur Verdrehsicherung der Verschiebeeinrichtung 60 aufnehmen.

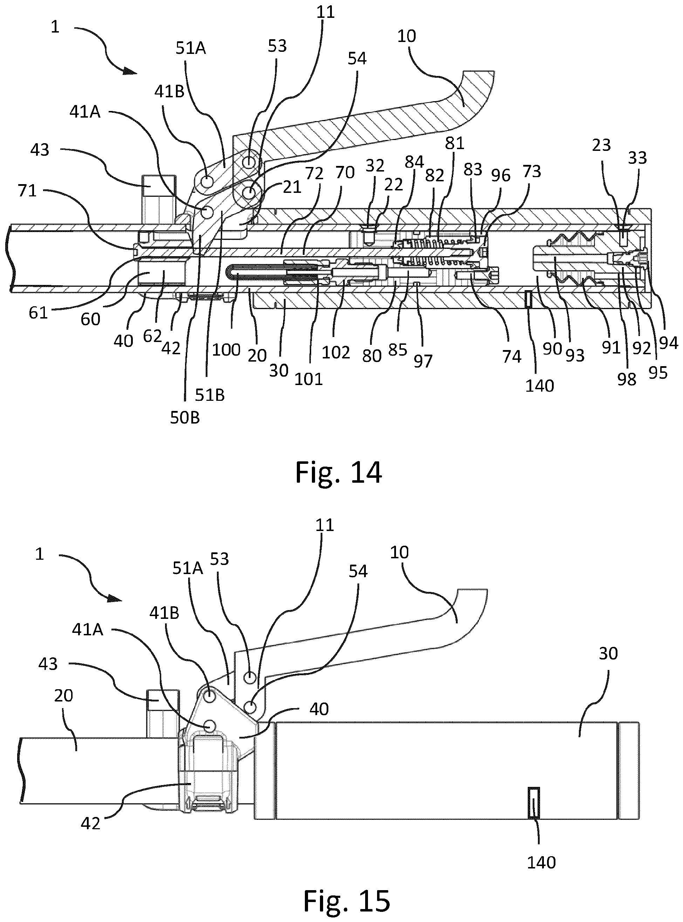

Fig. 14 und 15 zeigen eine alternative Ausführungsform der Erfindung, die im Wesentlichen der in den Figuren 1 bis 9 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Der Hebel 10 und das Druckstück 50B sind über zwei Drehpunkte 41A und 41B und einen Arm 51A an der Aufnahme 40 angelenkt. Der Hebel weist einen Armabschnitt 11 und das Druckstück 50B weist einen Armabschnitt 51B auf. Der Arm 51 ist über die Drehachse 41B an der Aufnahme 40 angelenkt und über die Drehachse 53 mit dem Hebel 10 verbunden. Das Druckstück 50B ist über die Drehachse 41A an der Aufnahme angelenkt und über die Drehachse 54 mit dem Armabschnitt 11 des Hebels verbunden.

Durch die vier Drehachsen 41A, 41B, 53 und 54 ist ein Parallelogramm definiert, dessen Seiten durch die Aufnahme 40, den Arm 51A, den Armabschnitt 51B und den Armabschnitt 11 gebildet werden.

Die Aufnahme 40 bildet eine feste Seite. Bei der Betätigung des Hebels drehen sich der Arm 51A und der Armabschnitt 51B nach unten und der Armabschnitt 11 des Hebels bewegt sich nach unten. Der Hebel 10 bewegt sich somit im Wesentlichen parallel auf das Lenkerrohr 20 zu und erfährt gleichzeitig eine leichte Bewegung in Längsrichtung des Griffrohrs, die von der Neigung des Armes 51A und des Armabschnitts 51B abhängt. Gleichzeitig wird das Druckstück 50B um die Drehachse 41A gedreht und betätigt die Hydraulik auf die oben beschriebene Weise durch die Verschiebung der Verschiebeeinrichtung in das Lenkerrohr (in Fig. 8 nach links).

Durch diese Konstruktion lässt sich eine angenehme und leichte Handhabung der Hydraulikgebervorrichtung realisieren.

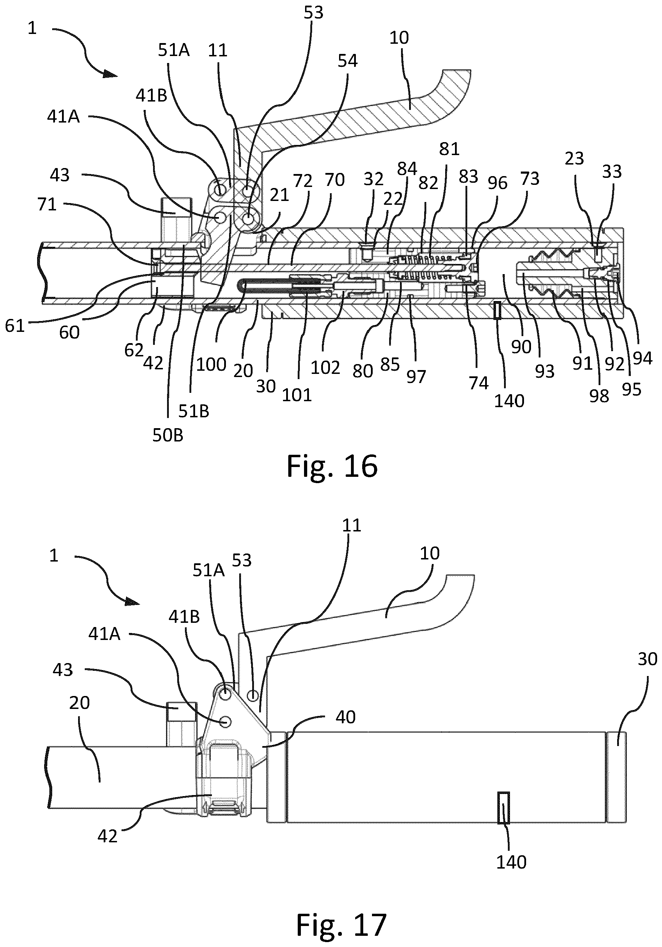

Die Figuren 16 und 17 zeigen eine alternative Ausführungsform der Erfindung, die im Wesentlichen der in den Figuren 14 und 15 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Bei dieser Ausführung ist die Anlenkung des Hebels 10 in der Ruhestellung so gewählt, dass der Arm 51A und der Armabschnitt 51B des Druckstücks 50B nahezu parallel zu dem Griffrohr 20 verläuft. Dadurch wird der Hebel 10 bei der Betätigung von Anfang nur in Richtung Fahrzeugmitte und nicht nach außen bewegt. Das hat den Vorteil, dass bei der Betätigung der Hydraulikgebervorrichtung die nicht verwendeten Finger (z.B. bei einer Zwei- oder Einfingerbetätigung) nicht so leicht zwischen den Hebel und das Lenkerrohr geraten können.

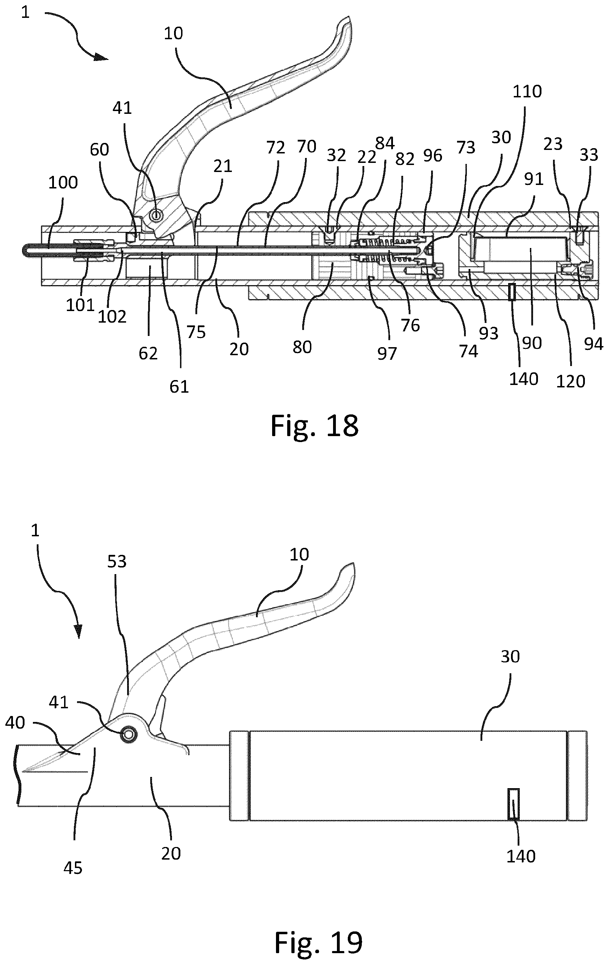

Die Figuren 18 bis 21 zeigen eine alternative Ausführungsform der Erfindung, die im Wesentlichen der in den Figuren 1 bis 3 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Bei dieser Ausführung ist in der Zugeinrichtung 70 eine Hydraulikkanal 75 vorgesehen, die von dem Druckraum 82 durch die Verschiebeeinrichtung 60 zu dem Anschlussstutzen 102 verläuft. Anstelle einer Zugstange ist somit ein Zugrohr vorgesehen, das als Hydraulikkanal 75 eingesetzt wird. Der Hydraulikkanal 75 ist über eine Öffnung 76 mit dem Druckraum 82 verbunden. Diese Ausführung hat den Vorteil, dass der Durchgang 62 nicht für die Hydraulikleitung verwendet wird und daher im Durchgang 62 Raum für andere Leitungen vorhanden ist, die insbesondere bei E-Bikes für andere Aufgaben erwünscht sind.

Bei dieser Ausführung ist die Aufnahme 40 in das Lenkerrohr 20 integriert. An dem Lenkerrohr sind zwei Laschen 45 ausgebildet, in denen eine Achse als Drehachse 41 für den Hebel 10 aufgenommen ist.

Der Ausgleichsraum 90 weist ein Ausgleichsgehäuse 120 auf. Der Ausgleichraum 90 ist der Raum zwischen dem Geberzylinder 80 und dem Ausgleichsgehäuse 120 und dem Raum in dem Ausgleichsgehäuse 120 sowie den entsprechenden Verbindungsleitungen, wie dem Durchgang 93.

Der Ausgleichsraum 90 ist hier nicht rotationssymmetrisch, sondern weist an der oberen Seite die Entlüftungsschraube 94 und den Durchgang 93 auf. Obere Seite ist in diesem Zusammenhang, die Seite, des Lenkerrohrs, die beim aufrechten Fahrzeug oben ist. Bei Fig. 18 ist das die untere Seite, denn der Hebel wird üblicherweise schräg nach unten montiert, um eine bequeme und natürliche Haltung bei der Betätigung zu ermöglichen.

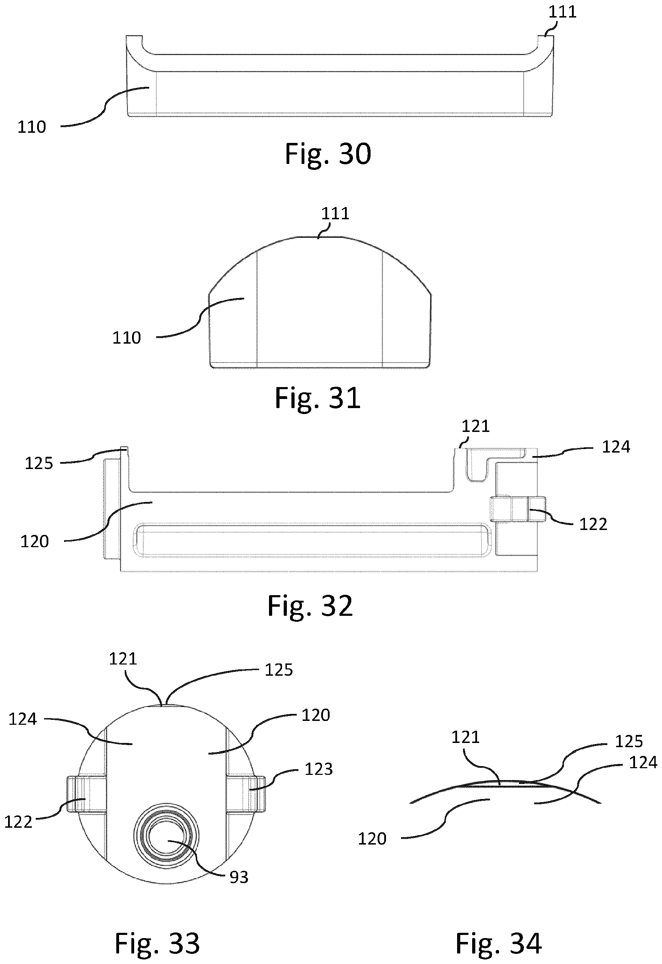

Auf der bezogen auf die Orientierung im Betrieb unteren Seite (In Fig. 18 oben) ist der Balg 91 vorgesehen, der mit einem Rahmen 110 in das Ausgleichsgehäuse 120 des Ausgleichsbehälters 90 gepresst ist. Der Rahmen kann entsprechend dem in den Figuren 30 und 31 gezeigten Rahmen aufgebaut sein.

Diese Orientierung des Ausgleichsraums mit der Entlüftungsschraube 94 auf der oberen Seite hat den Vorteil, dass die Entlüftung des Systems leicht und sicher durchgeführt werden kann. Nachteilig für die Betriebssicherheit könnte jedoch sein, dass der Durchgang entsprechend auf der oberen Seite angeordnet ist, weil sich dort eventuell Luft bzw. Gas sammeln könnte. Um diesen Nachteil zu vermeiden, könnte der Durchgang 93 gegenüber der Entlüftungsschraube 94 verdreht, d.h. an einer weiter unten liegenden Stelle des Ausgleichsgehäuses 120 angeordnet werden.

Die Figuren 22 und 20 zeigen eine alternative Ausführungsform der Erfindung, die im Wesentlichen der in den Figuren 18 bis 21 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Bei dieser Ausführung ist die Aufnahme 40 mit einer Schelle 42 an dem Lenkerrohr befestigt. Das hat den Vorteil, dass die Griffweite über die Einstellung der Position der Aufnahme 40 gegenüber der Verschiebeeinrichtung 60 eingestellt werden kann.

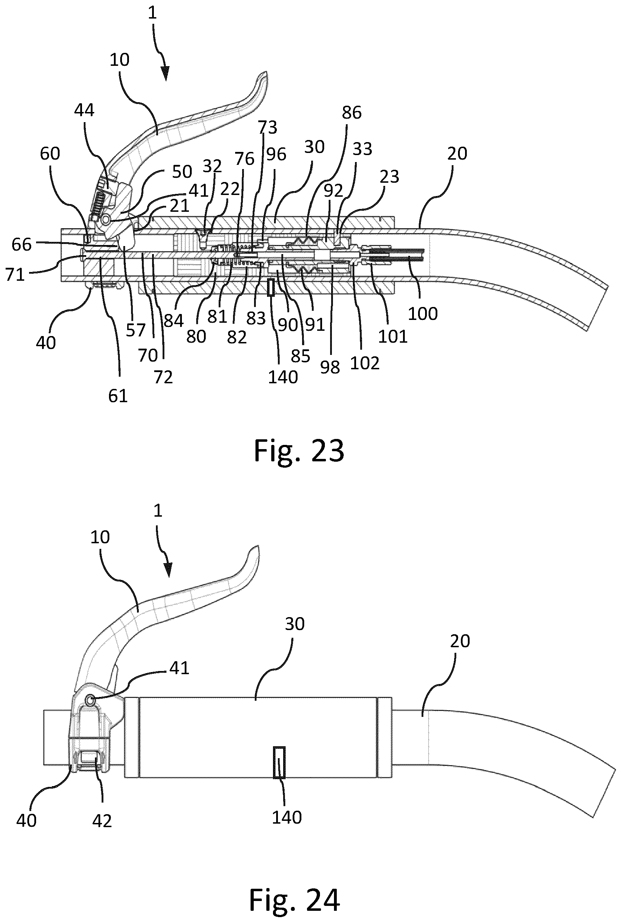

Die Figuren 23 bis 24 zeigen eine alternative Ausführungsform der Erfindung, die im Wesentlichen der in den Figuren 1 bis 3 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Bei der Ausführungsform der Figuren 23 und 24 ist das Griffrohr 30 bezogen auf den Hebel 10 und die Aufnahme 40 näher zur Fahrzeug- bzw. Lenkermitte angeordnet. Mit anderen Worten ist der Hebel 10 an der äußeren Seite des Lenkerrohrs 20 angeordnet.

Der Kopf 71 der Zugeinrichtung 70 ist daher von der Außenseite des Lenkerrohrs 20 erreichbar, so dass die Griffweite des Hebels 10 durch Veränderung der Länge der Zugstange (Hauptkörper 72) eingestellt werden kann. Beispielsweise könnte der Kopf 71 als eine Schraube ausbildet sein, die auf einen Gewindeabschnitt der Zugstange aufgeschraubt ist, so dass durch verdrehen des Kopfs 71 die Griffweite eingestellt werden kann.

Die den Kolben des Geberzylinders 80 bildende Verschraubung 73, an dem die Zugeinrichtung 70 angreift, weist einen Stutzen 731 auf, der sich in den Ausgleichsraum 90 erstreckt, der in Richtung Fahrzeugmitte angeordnet ist. In dem Stutzen 731 ist eine Druckleitung 85 angeordnet, die über eine Öffnung 76 mit dem Druckraum 82 in Verbindung steht.

Die Druckleitung 85 verläuft durch den Ausgleichsraum 90 und ist an eine Hydraulikleitung 100 angeschlossen.

Die Verschiebeeinrichtung 60 ist an der Außenseite des Lenkerrohrs 20 angeordnet. Durch Verschieben der Aufnahme 40 auf dem Lenkerrohr 20 kann die griffweite eingestellt werden. Alternativ kann auch die Zugeinrichtung 70 in der Verschiebeeinrichtung 60 verstellt werden, in dem der Kopf 71, der als Schraube ausgebildet sein kann, gegenüber dem Hauptkörper 72 verstellt wird, bzw. der Hauptkörper in der Verschraubung 73 verdreht wird.

Der Geberzylinder 80 ist relativ zu der Verschiebeeinrichtung 60 weiter in Richtung Fahrzeugmitte bzw. zwischen der Verschiebeeinrichtung 60 und dem Ausgleichsraum 90 angeordnet.

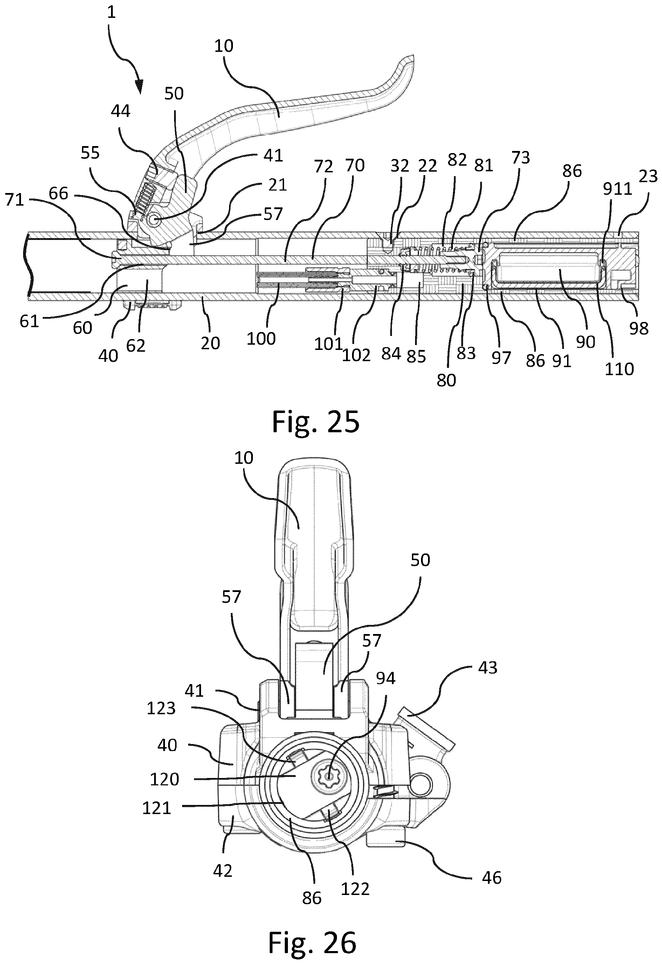

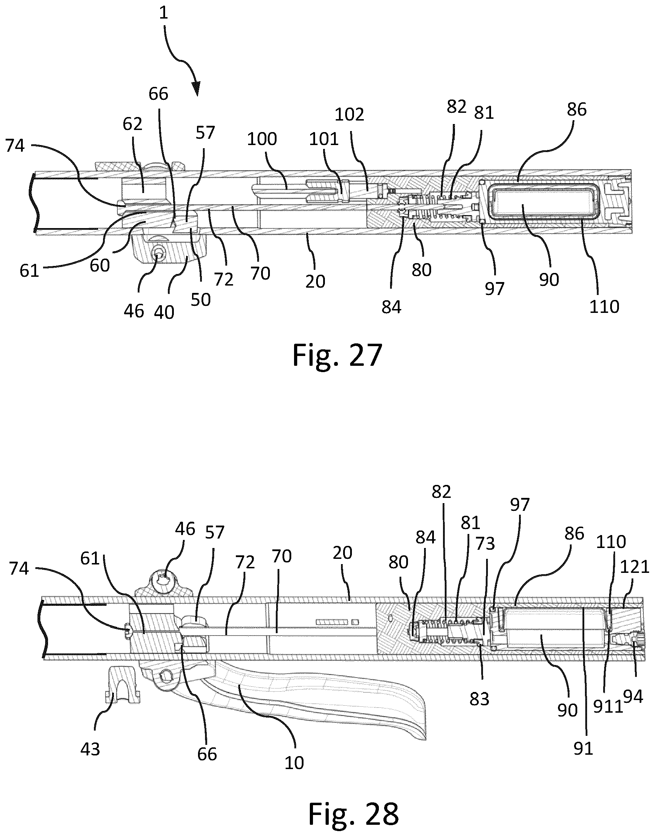

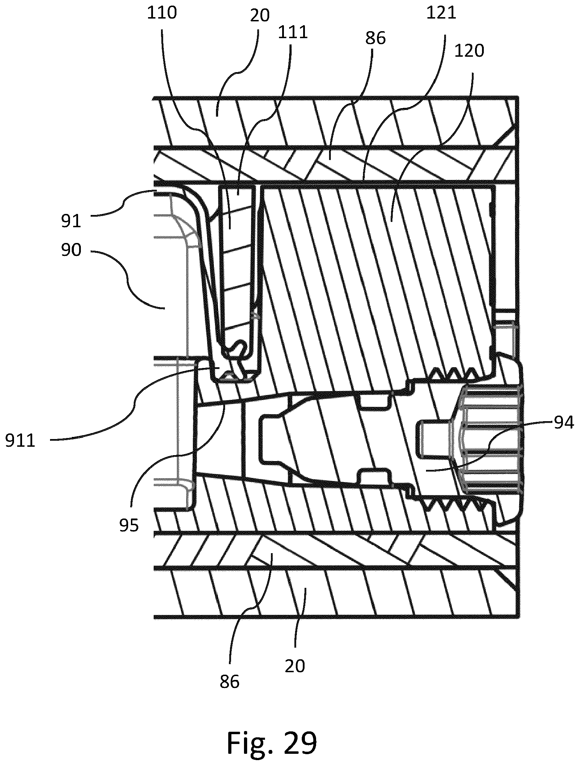

Die Figuren 25 bis 34 zeigen eine alternative Ausführungsform der Erfindung, die im Wesentlichen der in der Figur 22 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Bei dieser Ausführung ist die Entlüftungsschraube 94 unten angeordnet. Das hat zwar den Nachteil, dass das Fahrzeug für eine möglichst sichere Entlüftung umgedreht oder auf die Seite gelegt bzw. angeordnet werden sollte, damit die Entlüftungsschraube 94 zum Entlüften möglichst weit oben angeordnet ist. Diese Ausführung hat aber den Vorteil einer höheren Betriebssicherheit, weil der Durchgang 93 weiter unten liegt und daher die Wahrscheinlichkeit, dass dort Luft bzw. Gas vorhanden ist, relativ gering ist.

Der Geberzylinder 80 weist wie die Ausführung der Figuren 10 bis 11 einen Fortsatz 86 auf, in dem der Ausgleichraum 90 aufgenommen ist, so dass der Geberzylinder 80 mit dem Ausgleichsraum 90 als vormontierte Einheit in das Lenkerrohr 20 eingebracht werden kann. Der Ausgleichsraum 90 umfasst bzw. besteht aus einem Ausgleichsgehäuse 120 mit dem Balg 91, der mit einem Rahmen 110 in dem Ausgleichsgehäuse 120 an seinem Wulst 911 gesichert ist. Das Ausgleichsgehäuse ist in dem Fortsatz 86 des Geberzylinders 80 angeordnet und mit zwei Schnappeinrichtungen 122, 123 in dem Fortsatz 86 gesichert, die in entsprechende Öffnungen einrasten, sobald das Ausgleichsgehäuse 120 weit genug in den Fortsatz eingeschoben worden ist.

Das Ausgleichsgehäuse 120 weist eine dem Geberzylinder 80 bzw. der Verschraubung 73 zugewandte Stirnseite 125 und eine dem Geberzylinder 80 bzw. der Verschraubung 73 abgewandte Stirnseite 124 auf, die eine Abflachung 121 aufweist. Die Abflachung sorgt für eine Verbindung von der Oberseite des Balgs 91 nach außen, so dass sich der Balg möglichst kräftefrei in den Ausgleichsraum hinein und daraus heraus bewegen kann, d.h. dass die Bewegung nicht gegen einen sich aufbauenden bzw. abbauenden Druck erfolgen muss. Der Rahmen 110 weist an seiner nach außen weisenden Stirnseite eine entsprechende Abflachung 111 auf.

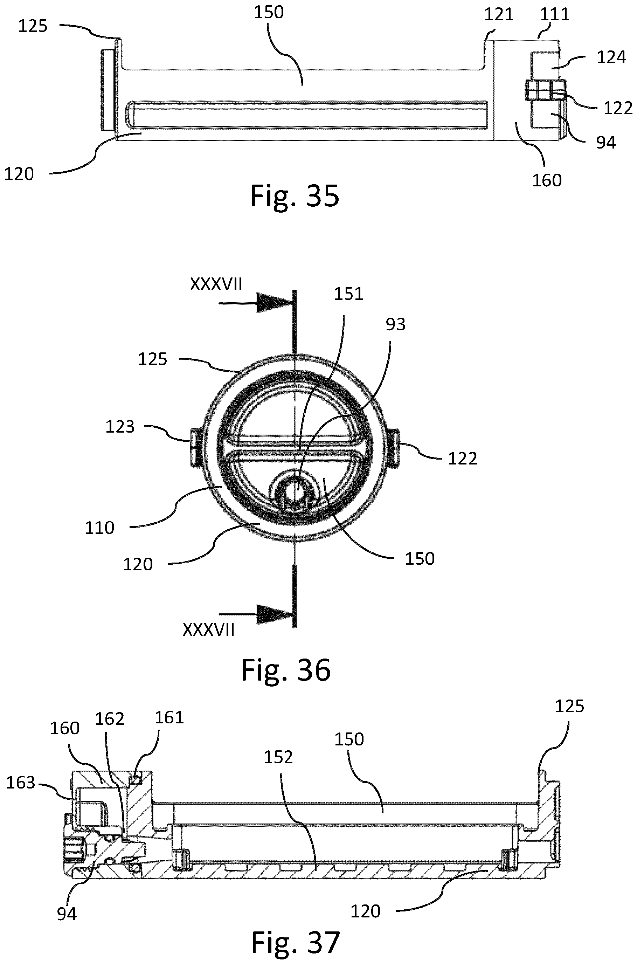

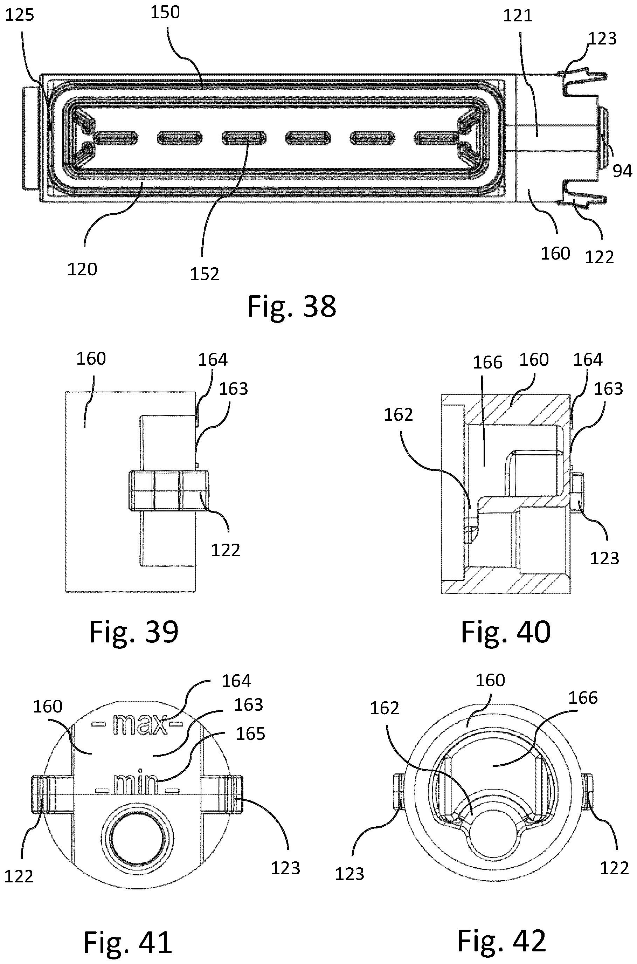

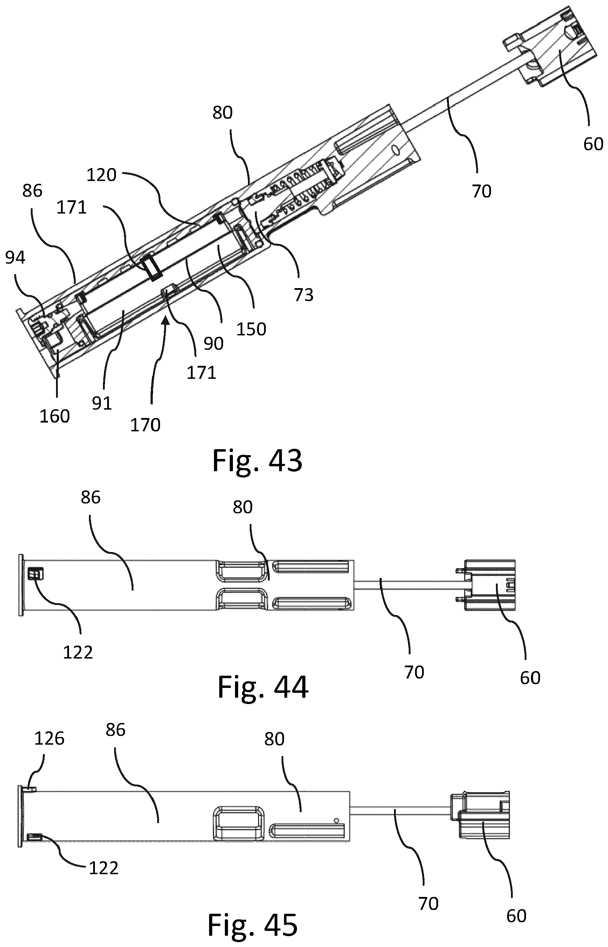

Die Figuren 35 bis 45 zeigen eine alternative Ausführungsform der Erfindung, die im Wesentlichen der in der Figur 25 bis 34 gezeigten Ausführungsform der Erfindung bzw. den anderen Ausführungsformen der Erfindung entspricht. Gleiche Bezugszeichen bezeichnen gleiche oder sich entsprechende Bauteile bzw. Merkmale. Auf die Beschreibung der anderen Ausführungsbeispiele der Erfindung wird verwiesen. Im Folgenden wird der Schwerpunkt auf die Unterschiede gelegt.

Das Ausgleichsgehäuse 120 ist zweigeteilt ausgeführt. Das hat bei einer Fertigung in Spritzgusstechnik einen Vorteil, wenn eine Füllstandsanzeige am Lenkerende vorgesehen werden soll. Alternativ kann das Ausgleichsgehäuse 120 auch einteilig mit einer Füllstandsanzeige am Lenkerende ausgeführt werden, wenn es mit anderen Fertigungsverfahren, wie beispielsweise Rapid-Prototyping wirtschaftlich herstellbar ist. Das dargestellte zweiteilige Ausgleichsgehäuse weist einen Ausgleichsabschnitt 150 und einen Anzeigeabschnitt 160 auf, die stirnseitig miteinander verbunden sind. In dem Übergangsbereich ist eine Dichtung 161 vorgesehen, die beispielsweise als O-Ring ausgeführt sein kann. An dem Ausgleichsabschnitt ist stirnseitig ein Steg 151 oberhalb des Durchgangs 93 vorgesehen, wie in Fig. 36 gezeigt.

Der Anzeigeabschnitt 160 steht mit dem Ausgleichsabschnitt 150 über einen Durchgang 162 in Fluidverbindung, der an der Entlüftungsschraube 94 vorbei ausgebildet ist. Dadurch ist der Anzeigeabschnitt 160 in dem Bereich 166 entsprechend dem Füllstand in dem Ausgleichsabschnitt 150 gefüllt, so dass der Füllstand durch die transparent ausgebildete Stirnwand 163 abgelesen werden kann. Zur Orientierung bzw. zum einfachen Ablesen können wie beim Ausführungsbeispiels an der Stirnwand 162 Markierungen 163 bzw. 164 vorgesehen sein, die beispielsweise das Erreichen eines maximalen bzw. minimalen Füllstands anzeigen.

Am Boden des Ausgleichsbehälters 150 können Vorsprünge 152 vorgesehen sein, auf denen sich der Balg 91 abstützen kann, wenn die Hydraulikgebervorrichtung beispielsweise zum Befüllen evakuiert wird.

Alternativ oder zusätzlich zu der optischen Füllstandsanzeige in dem Anzeigeabschnitt 160 bzw. der Anzeige 140 der anderen Ausführungsbeispiele kann auch eine Sensoreinrichtung 170 zur Erfassung des Füllstands in dem Ausgleichsraums 90 vorgesehen sein. Beispielsweise kann ein Magnet 171 am dem Balg 91 vorgesehen sein, dessen relative Lage mit einem Sensor 172 erfasst wird. Je nach Füllstand der Ausgleichsraums 90 wird der Balg 91 durchhängen. Daher kann der Magnet 171 vorteilhafterweise in der Mitte des Balgs angeordnet sein, um eine möglichst Lageänderung in Abhängigkeit von dem Füllstand zu erfahren. Der Magnet kann auf eine geeignete Weise an dem Balg 91 angeordnet sein. Beispielsweise kann der Magnet 171 in einer Tasche aufgenommen sein, die an dem Balg ausgebildet ist. Alternativ kann der Magnet 171 auch durch Umspritzen des Balges an dem Balg fixiert sein. Verkleben oder ein anderes geeignetes Befestigungsverfahren ist denkbar. Eine derartige Sensorvorrichtung zur Erfassung des Füllstandes des Ausgleichsraums kann auch bei den anderen Ausführungsbeispielen vorgesehen sein.

An dem Fortsatz 86 ist Steg 126 bzw. eine Rippe vorgesehen, die als Verdrehsicherung in eine entsprechende am Ende des Lenkerrohrs vorgesehene Aussparung angeordnet werden kann.

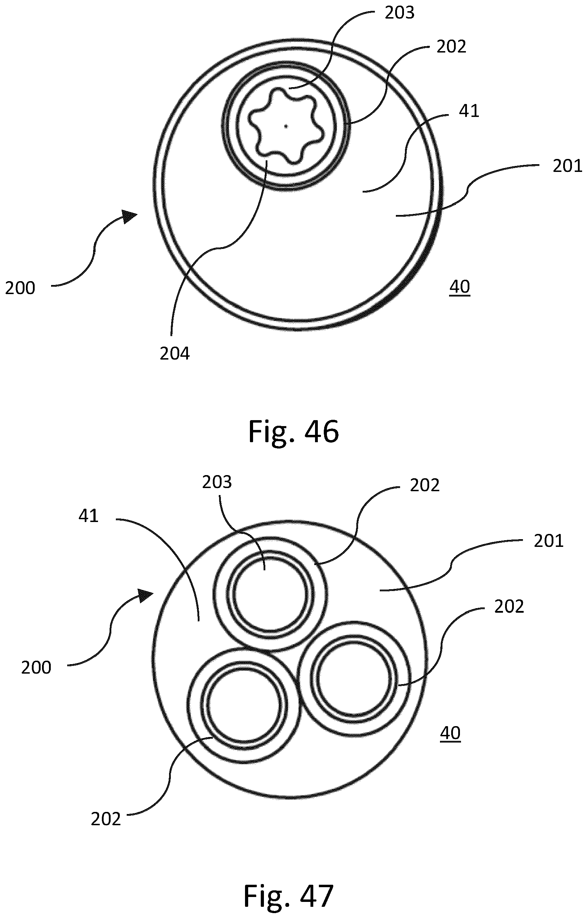

Fig. 46 zeigt eine Exzentereinrichtung 200 für eine Hydraulikgebervorrichtung gemäß der Erfindung, mit der die oben beschriebene und den anderen Figuren gezeigte Drehachse 41 der anderen Ausführungen der Erfindung, um die der Hebel schwenkt, exzentrisch ausgebildet werden kann, so dass der Drehachsenpunkt bei der Hebelbetätigung mit zunehmender Drehbewegung näher zum Lenker bzw. weiter vom Lenker weg bewegt werden kann, so dass sich der wirksame Hebelarm ändert, um eine schnellere Betätigung mit weniger Kraft bzw. eine langsamere Betätigung mit mehr Kraft zu bewirken. Die Exzentereinrichtung 200 weist eine Dreheinrichtung 201 auf, die drehbar in der oben beschriebenen und in den anderen Figuren gezeigten Aufnahme 40 aufgenommen ist und der in den anderen Figuren gezeigten schematisch gezeigten Drehachse 41 entspricht. Bei der Exzentereinrichtung 200 ist in der Dreheinrichtung 201, die einen im Wesentlichen kreisförmigen Umfang hat, außermittig eine Anlenkaufnahme 202 ausgebildet, in der eine Hebelaufnahme 203 angeordnet ist, die zur Aufnahme des Hebels dient. Eine Befestigungseinrichtung 204 kann zur Befestigung der Hebelaufnahme 203 vorgesehen sein und eine bekannte Werkzeugaufnahme aufweisen.

Fig. 47 zeigt eine Variante der Exzentereinrichtung 200, bei der in der Dreheinrichtung 201 beispielsweise 3 Anlenkaufnahmen 202 ausgebildet sind, in denen die Hebelaufnahme 203 alternativ angeordnet werden kann, um die erfindungsgemäße Hydraulikvorrichtung ergonomisch an den Fahrer anpassen zu können. Erfindungsgemäß können auch nur zwei oder mehr als drei Anlenkaufnahmen vorgesehen sein. Zusätzlich kann die die Anlenkaufnahme auch in verschiedenen Winkelstellungen in der Dreheinrichtung eingesetzt und gesichert werden, um Zwischenstellungen für eine ergonomische Feineinstellung einstellen zu können.

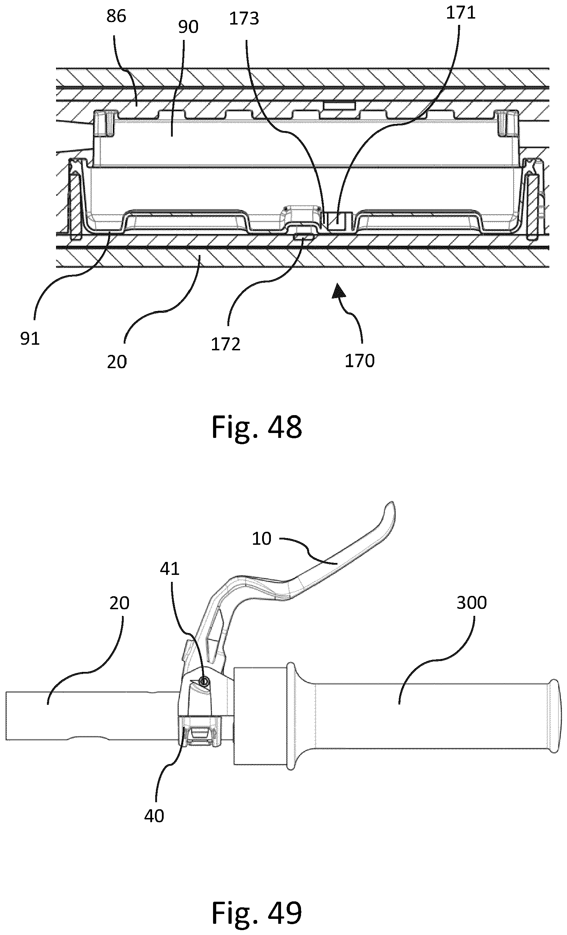

Fig. 48 zeigt eine Füllstandssensorvorrichtung 170 für eine Hydraulikgebervorrichtung gemäß der Erfindung, die bei den anderen Ausführungen der Erfindung realisiert werden kann. Der Sensor 172 ist in dem Fortsatz 86 aufgenommen. Der Magnet 171 ist in einer in dem Balg 91 ausgebildeten Aufnahme 173 aufgenommen. Mit der Veränderung des Vorratsvolumens in dem Ausgleichsraum 90 verformt sich der Balg 91 und ändert sich der Abstand zwischen dem Sensor 172 und dem Magneten 171. Alternativ oder zusätzlich zu dem Magneten können alternative dem Fachmann bekannte Sensorgeber und entsprechende Sensoren eingesetzt werden.

Figur 49 zeigt eine Ansicht einer Hydraulikgebervorrichtung gemäß der Erfindung mit einer Drehgriffeinrichtung 300. Die Drehgriffeinrichtung kann beispielsweise einen Drehgriff zur elektronischen Betätigung von Gas und/oder Kupplung umfassen. Die Drehgriffeinrichtung 300 ist an der Aufnahme 40 aufgenommen und drehgelenkig derart befestigt, dass sie um das Lenkerrohr 20 drehbar gelagert ist. Die Aufnahme 40 hat daher eine Doppelfunktion zur drehgelenkigen Aufnahme des Hebels 10 und der drehgelenkigen Aufnahme der Drehgriffeinrichtung 300. Die Drehachsen stehen dabei ungefähr senkrecht aufeinander. Der Winkel kann bei einer schrägen Anordnung der Drehachse des Hebels 10 auch kleiner als 90 Grad sein, beispielsweise 85 Grad bzw. innerhalb der oben genannten bevorzugten Grenzwerte liegen.

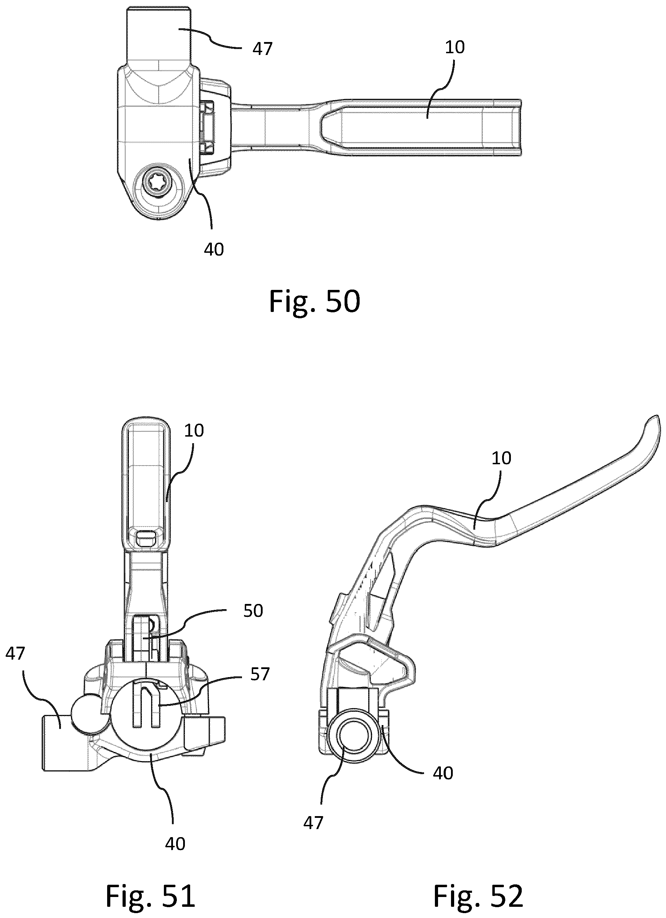

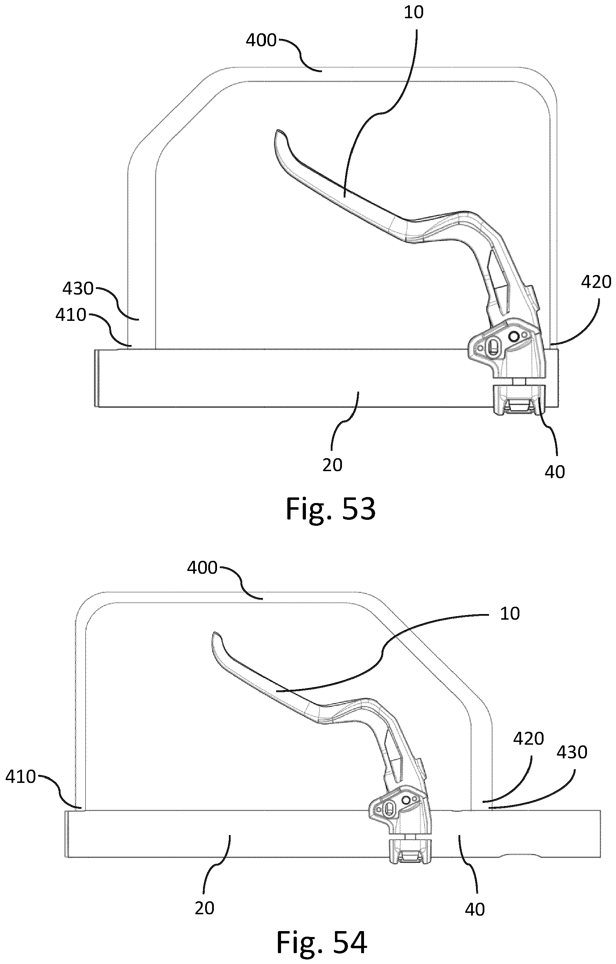

Die Figuren 50 bis 52 zeigen eine Aufnahme 47 für eine Hydraulikgebervorrichtung gemäß der Erfindung. Die Aufnahme 47 ist als Spiegelhalterung ausgebildet, in die ein Spiegel auf eine dem Fachmann bekannte Weise eingesetzt werden kann. Die Aufnahme kann entsprechend zur Aufnahme anderer Bauteile ausgebildet und angeordnet werden. Bei der dargestellten Ausführung der Erfindung ist ein Hebel 10 und ein Druckstück 50 mit Fortsätzen 57 vorgesehen. Erfindungsgemäß kann der Hebel auch ohne Druckstück direkt auf den Kolben bzw. die Zugeinrichtung einwirken, wobei die Fortsätze 57 entsprechend an dem Hebel ausgebildet sein können. Die Figuren 53 und 54 zeigen Ansichten von Schutzvorrichtungen 400 erfindungsgemäßer Hydraulikgebervorrichtungen. Die Schutzvorrichtung 400 umfasst einen Schutzbügel zum Schutz der Hand des Fahrers. Die Schutzvorrichtung 400 umfasst einen außenliegenden Bereich 410 und einen innenliegenden Bereich 420 sowie einen Klemmbereich 430, an dem die Schutzvorrichtung 400 an das Lenkerrohr 20 geklemmt ist. Bei der in Fig. 53 gezeigten Ausführung ist der Klemmbereich 430 im außenliegenden Bereich 410 vorgesehen. Bei der in Fig. 54 gezeigten Ausführung ist der Klemmbereich 430 im innenliegenden Bereich 420 vorgesehen.

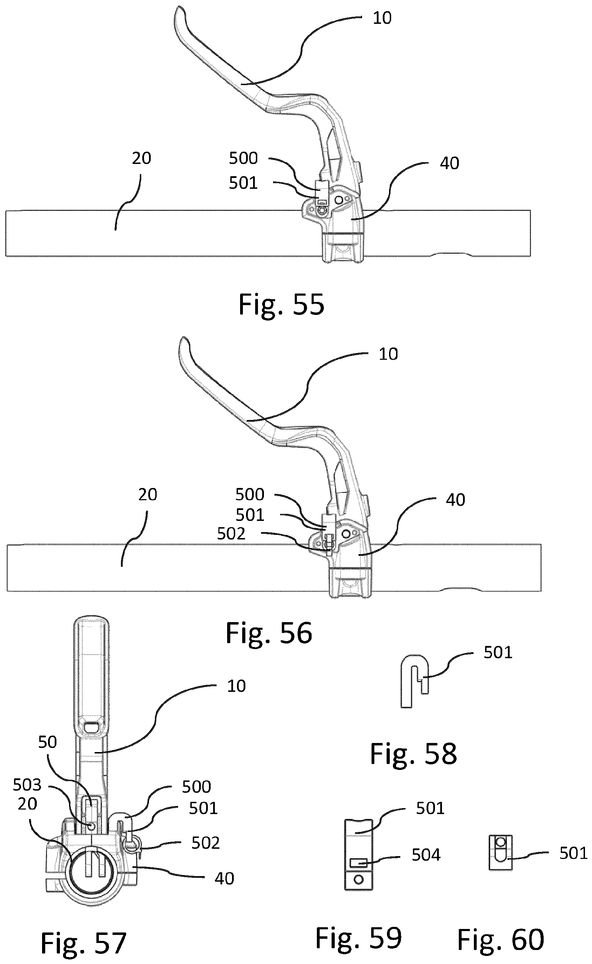

Die Figuren 55 bis 60 zeigen Ansichten von Schaltereinrichtungen 500 und deren Details erfindungsgemäßer Hydraulikgebervorrichtungen.

Die in Figur 55 gezeigte Schaltereinrichtungen 500 umfasst einen Sensor 501, die an der Aufnahme 40 angeordnet ist und mit einem beispielsweise in dem Druckstück 50 angeordneten Signalgeber, wie beispielsweise einem Magneten zusammenwirkt, der in einer Aufnahme 503 angeordnet ist. Der Sensor 501 kann z.B. einen Hallsensor oder einen Reedkontakt umfassen.

Wie in Fig. 56 gezeigt, kann an dem Sensor 501 eine Aufnahme 502 für ein Kabel angeordnet sein. Die Aufnahme 502 kann z.B. ein Kabelbinder sein, der in einer Aussparung 504 angeordnet werden kann, die im Gehäuse des Sensors 501 vorgesehen ist.

Die Lage des Sensors 501 in der Aufnahme 40 ist in der Höhe einstellbar. Das Sensorgehäuse ist symmetrisch aufgebaut, so dass die gleichen Bauteile für den linken und rechten Geber verwendbar sind.

Der Sensor 501 kann mit seinem Gehäuse beispielsweise mittels einer Schraube oder einem Clip an der Aufnahme befestigt sein. An dem Gehäuse des Sensors 501 ist eine Befestigungsmöglichkeit für das Kabel des Sensors über eine Öse oder einen Kabelbinder geschaffen.

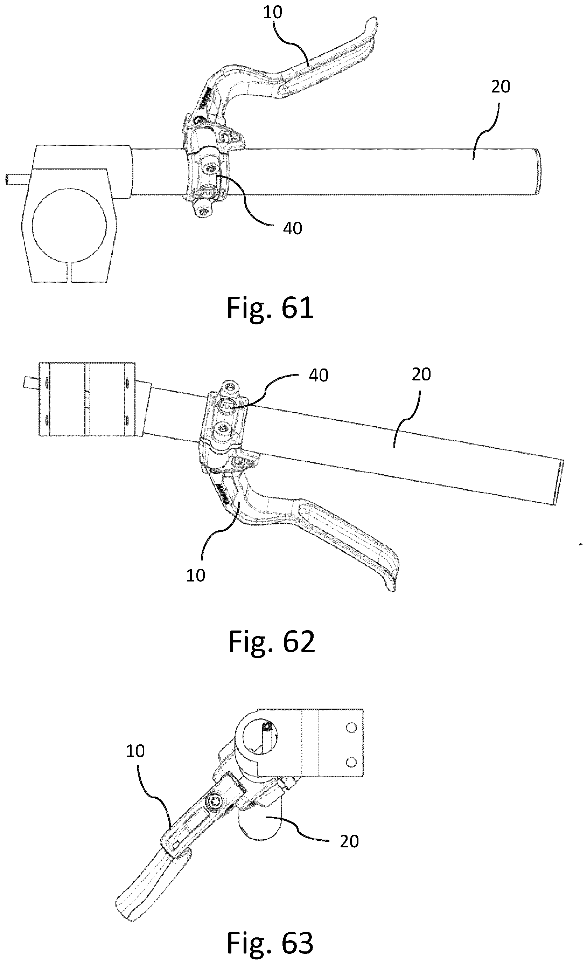

Die Figuren 61 bis 63 zeigen perspektivische Ansichten einer erfindungsgemäßen Hydraulikgebervorrichtung, die an Lenkerrohr 20 angeordnet ist, das als Lenkerstummel ausgebildet ist. Der Lenkerstummel ist auf dem Fachmann bekannte Weise an dem Lenkergeführten Fahrzeug angeordnet.

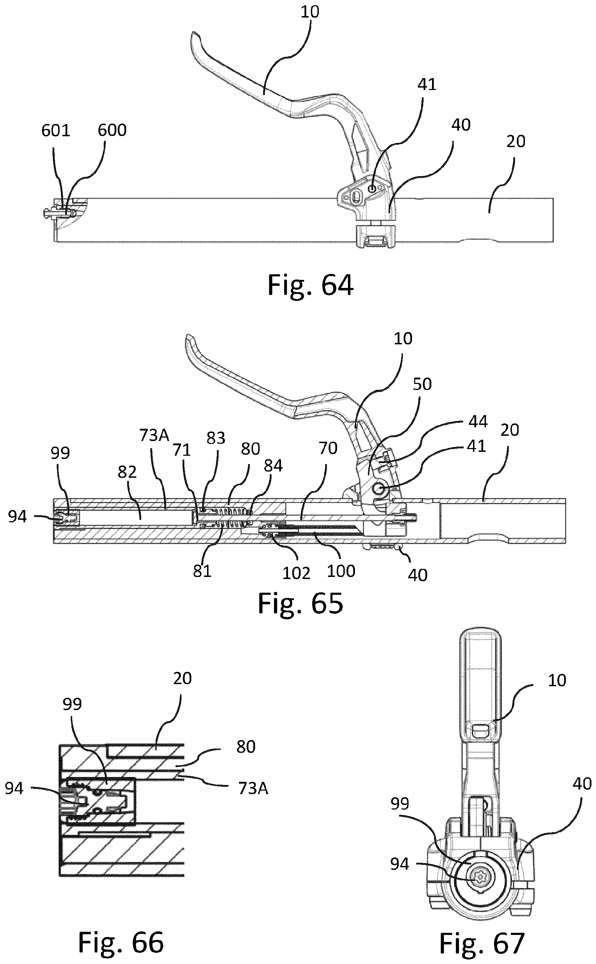

Wie in Fig. 64 gezeigt, kann bei einer erfindungsgemäßen Hydraulikgebervorrichtung ein Entlüftungsventil 600 an dem Lenkerende vorgesehen sein. Die Aufnahme 601 kann dabei optional als Luerkonus ausgebildet sein, damit eine handelsübliche Spritze zum leichten Befüllen verwendet werden kann.

Die Figuren 65 bis 67 zeigen Ansichten einer weiteren erfindungsgemäßen Hydraulikgebervorrichtung. Diese Ausführung weist ein geschlossenes Hydrauliksystem auf. Die Zugvorrichtung 70 weist einen Kopf 71 auf, der in dem Kolben 73A der Hydraulikgebervorrichtung angeordnet ist. Der Kolben 73 A weist einen Fortsatz auf, der sich bis zu dem Lenkerende erstreckt. Der Druckraum 82 erstreckt sich von dem Bereich, in dem die Rückstellfeder 81 angeordnet ist, über den Bereich, in dem der Kopf 71 an den Kolben 73A angreift, bis zu dem Lenkerende, wo eine Einstelleinrichtung 99 vorgesehen ist. Die Einstelleinrichtung weist einen Kolben auf, der in den Kolben 73A eingeschraubt werden kann, um das Volumen des Druckraums 82 zu verkleinern. Dadurch wird der Leerweg verringert. Auf diese Weise kann eine Veränderung des Leerwegs ausgeglichen werden, die beispielsweise bei einem Verschleiß der Bremsbeläge entsteht. Die Abdichtung des Druckraums 82 erfolgt über die Dichtungen 83 und 84 sowie die Einstelleinrichtung 99, die in das Ende des Kolbens 73A eingeschraubt ist. Eine Abdichtung am Kopf 71 der Zugeinrichtung 70 ist nicht erforderlich, weil dieser Bereich innerhalb des Druckraums liegt. In der Einstelleinrichtung 99 ist eine Entlüftungsschraube 94 angeordnet, über die das System entlüftet bzw. befüllt werden kann.

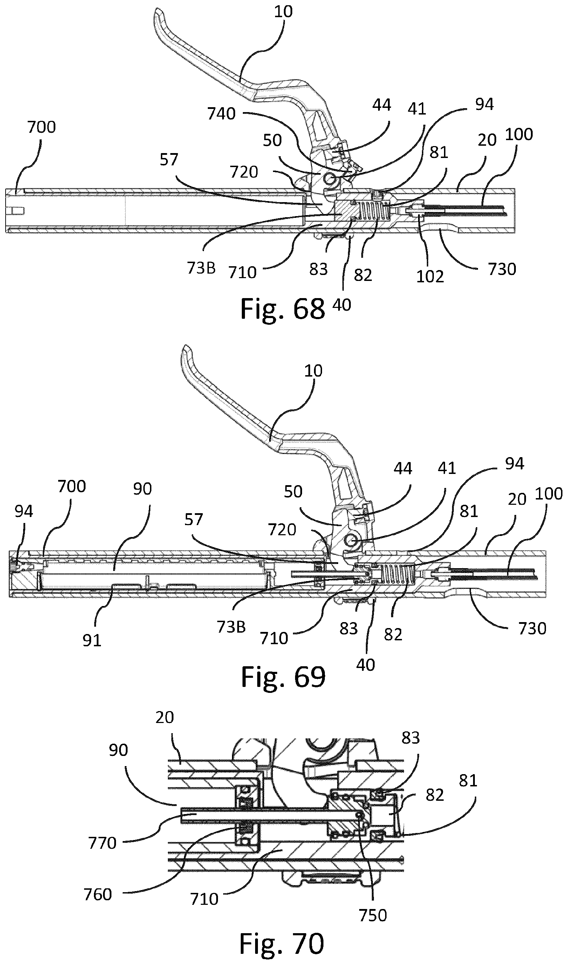

Die Figuren 68 bis 76 zeigen Hydraulikgebervorrichtungen, die die kennzeichnenden Merkmale von Anspruch 1 nicht aufweisen, aber mögliche Weiterbildungen der Erfindung hinsichtlich anderer Merkmale verdeutlichen, wie im folgenden erläutert wird.

Fig. 68 zeigt eine Ansicht einer weiteren Hydraulikgebervorrichtung. Diese Ausführung weist einen Einsatz 700 auf, der in einem Lenkerrohr 20 angeordnet ist. An dem Ende des Einsatzes 700, das zur Fahrzeugmitte angeordnet ist, ist ein Geberzylinder 710 mit einem Kolben 73B angeordnet, der mit einer Primärdichtung 83 gegenüber der Innenwandung des Geberzylinders 710 einen Druckraum 82 abdichtet. Eine Hydraulikleitung 100 ist an dem Geberzylinder 710 auf dem Fachmann bekannte Weise angeschlossen.

Die Kraft des Hebels 10 wird über ein Druckstück 50 auf den Kolben 73B übertragen. Das Druckstück 50 weist einen Fortsatz 57 auf, der in den Einsatz 700 eingreift und an dem Kolben 73B anliegt.

Der Hebel 10 und das Druckstück 50 sind über eine außen am Lenkerrohr 20 angeordnete Aufnahme 40 an dem Lenkerrohr angeordnet. Die korrekte Ausrichtung zwischen Kolben und Hebelbaugruppe kann durch nicht dargestellte Anschläge bzw. Verschieben der Aufnahme erreicht werden.

Zwischen dem Hebel 10 und dem Druckstück 50 ist eine Griffweitenverstelleinrichtung 44 vorgesehen, die den Winkel zwischen dem Hebel 10 und dem Druckstück beeinflusst.

Zwischen dem Hebel 10 und der Aufnahme 40 ist eine Leerwegeinstelleinrichtung 740 vorgesehen, die den Winkel zwischen dem Hebel 10 und der Aufnahme 40 und somit den Leerweg beeinflusst. Dadurch ist ein Ausgleich möglich, wenn beispielsweise die Bremsbeläge im Laufe der Zeit abnutzen. Das ist bei geschlossenen Systemen, wie beispielsweise Felgenbremssystemen vorteilhaft.

Die Hydraulikleitung 100 kann über die in dem Lenkerrohr 20 vorgesehene Wartungsöffnung 730 von dem Geberzylinder 710 getrennt und daran angeschlossen werden.

Zur Entlüftung des Hydrauliksystems ist eine Entlüftungsschraube 94 vorgesehen, die in dem Geberzylinder 710 angeordnet ist. In dem Lenkerrohr 20 ist eine Öffnung vorgesehen, damit die Entlüftungsschraube 94 von außen bedient werden kann.

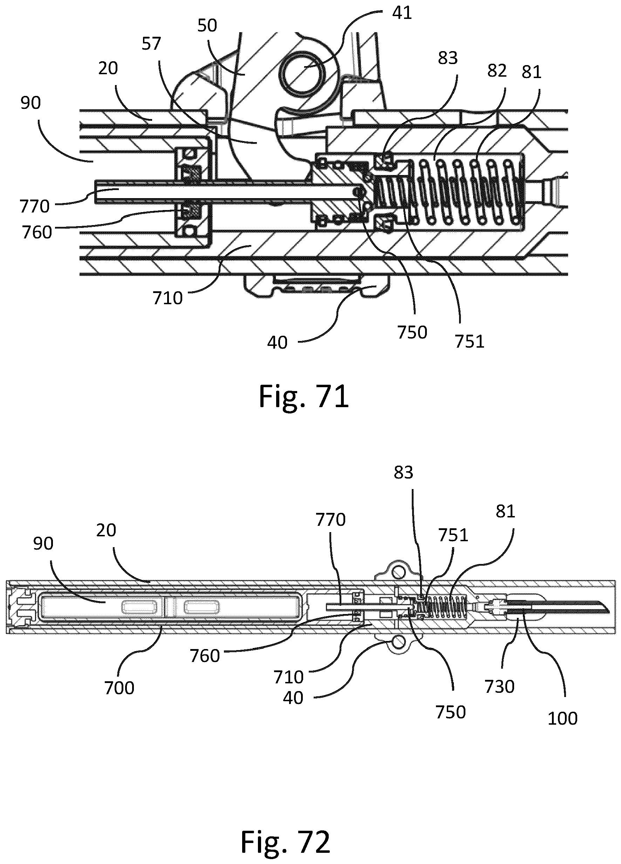

Die Figuren 69 bis 72 zeigen Ansichten einer weiteren Hydraulikgebervorrichtung. Diese Ausführung weist einen Ausgleichsraum 90 auf, der in dem Einsatz 700 angeordnet ist. Der Ausgleichsraum ist über eine Dichtung 760 gegenüber dem Bereich abgedichtet, in dem das Kraftübertragungsteil in den Einsatz eingreift. Die Verbindung zwischen dem Druckraum 82 und dem Ausgleichsraum 90 erfolgt über ein Zentralventil 750, das in dem Kolben 73B angeordnet ist und über eine Leitung 770 eine Verbindung zu dem Ausgleichsraum schafft. Das Zentralventil weist eine Schließfeder auf, die in den Figuren 71 und 72 gezeigt ist. Das Zentralventil 750 verschließt bei der Betätigung der Hydraulikgebervorrichtung die Verbindung zwischen Druckraum 82 und Ausgleichraum 90. Im nicht betätigten Zustand bzw. Ruhezustand kann ein Ausgleich erfolgen.

Die Leitung 770 ist zwischen den Fortsätzen 57 des Druckstücks 50 angeordnet. Da diese Ausführung der Erfindung einen Ausgleichsraum aufweist, kann die Leerwegeinstelleinrichtung 740 entfallen. Sie kann aber auch vorgesehen werden, um die Einstellung des gewünschten Leerwegs zu ermöglichen, der wegen des Ausgleichsraums unabhängig vom Verschließ der Bremsbeläge gleichbleibt.

Diese Ausführung hat den Vorteil, dass ein Leitungsabgang zum Nehmer mit einem großen Querschnitt bereitgestellt werden kann, obwohl der Geberzylinder 710 in dem Lenker angeordnet ist. Das ist der Fall, weil der gesamte Querschnitt des Lenkerrohrs 20 zur Verfügung steht.

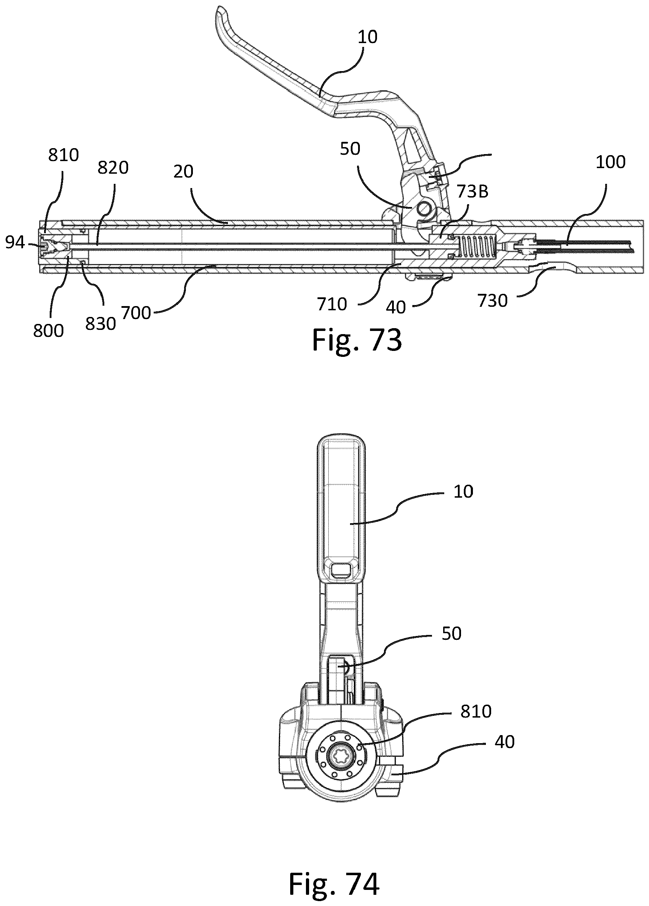

Die Figuren 73 und 74 zeigen Ansichten einer weiteren Hydraulikgebervorrichtung. Bei dieser Ausführung ist kein Ausgleichsraum vorgesehen. Diese Ausführung weist eine Leerwegeinstelleinrichtung 800 auf, die derart ausgebildet und angeordnet ist, dass sie den Kolben 73B in dem Einsatz 700 als eine mechanische Fernsteuereinrichtung verschiebt. Die Leerwegeinstelleinrichtung 800 umfasst eine Verstelleinrichtung 810, die als ein Schraubeinsatz ausgebildet und in dem Einsatz drehbar angeordnet ist. Die Verstelleinrichtung 810 ist über eine bzw. die Verbindungseinrichtung 820 mit dem Kolben 73B verbunden. Die Verbindungseinrichtung ist eine Stange, die mit einem Gewinde in den Kolben 73B eingreift. Durch Drehen der Verstelleinrichtung 810 wird der drehfest im Einsatz 700 angeordnete Kolben axial in dem Einsatz verschoben, so dass der Leerweg verstellt wird. Um eine unbeabsichtigte Verstellung des Leerwegs zu vermeiden, weist die Verstelleinrichtung 810 eine Hemmeinrichtung 830 auf, die hier als in einer Rille der Verstelleinrichtung 810 bzw. des Schraubeinsatzes bzw. Dreheinsatzes angeordneter O-Ring ausgebildet ist. Die Hemmung erfolgt durch die Haftreibung zwischen dem O-Ring und dem Einsatz 700 bzw. dem O-Ring und der Verstelleinrichtung 810.

Bei der in den Figuren 73 bis 74 gezeigten Ausführung kann eine Entlüftungsschraube 94 entsprechend der Ausführung von Fig. 68 vorgesehen werden.

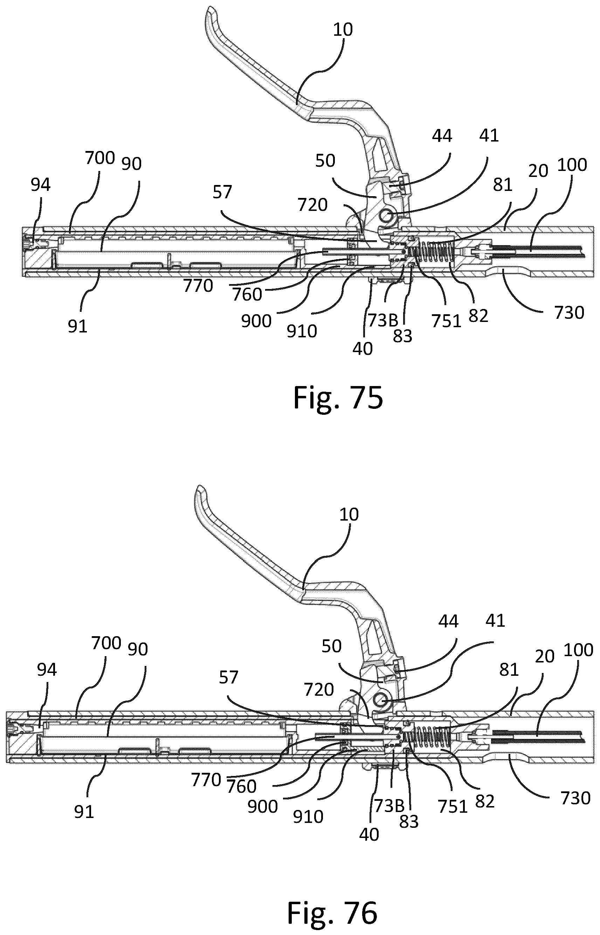

Die Figuren 75 und 76 zeigen Ansichten weiterer Hydraulikgebervorrichtungen, die eine Anschlageinrichtung 900 für den Kolben 73b aufweisen. Bei der Ausführung von Fig. 75 ist die Anschlageinrichtung 900 durch einen Fortsatz 910 realisiert, der als ein verlängerter Steg des Ausgleichsbehälters ausgebildet ist. Bei der Ausführung von Fig. 76 ist die Anschlageinrichtung 900 durch einen Fortsatz 910 realisiert, der in die Aufnahme für die Dichtung 760 integriert sein oder als separater Einsatz zwischen der Aufnahme für die Dichtung 760 und den Kolben 73B vorgesehen werden kann.

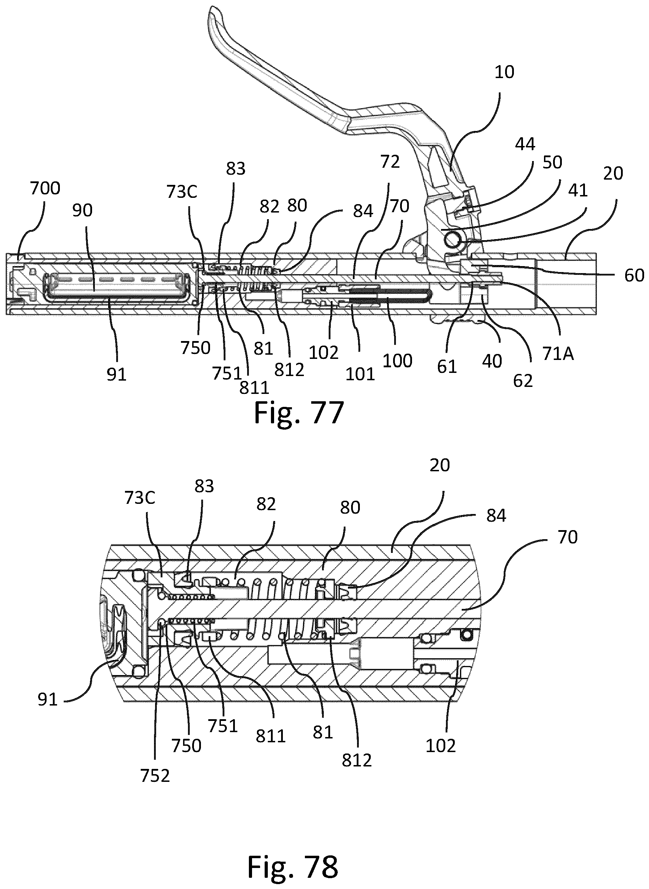

Die Figuren 77 und 78 zeigen Ansichten einer weiteren erfindungsgemäßen Hydraulikgebervorrichtung. Bei dieser Ausführung ist eine Zugeinrichtung 70 in Kombination mit einem Ausgleichsraum 90 vorgesehen, der mit dem Druckraum 82 über ein Zentralventil 750 in Verbindung gebracht werden kann, wenn die Hydraulikgebervorrichtung nicht betätigt wird. Da das Zentralventil 750 dieser und der weiteren Ausführungen der Erfindung und seine Komponenten sehr ähnlich zu dem Zentralventil 750 bei der oben beschriebenen Ausführung aufgebaut und ausgebildet ist, werden für die Beschreibung des Zentralventils 750 und seiner Komponenten die gleichen Bezugszeichen 750, 751 und 752 verwendet. Das Zentralventil 750 ist in dem Kolben 73C vorgesehen. Das Ende der Zugeinrichtung 70 ist in einem Durchgang angeordnet, der sich durch den Kolben 73 C erstreckt. Eine Ventilfeder 751 drückt das Schließglied, das durch den Kopf der Zugeinrichtung 70 gebildet wird, aus dem Ventilsitz, der an dem Kolben 7C ausgebildet ist. Wenn die Hydraulikgebervorrichtung nicht betätigt ist, ist daher das Zentralventil 750 geöffnet und schafft eine Verbindung zwischen dem Druckraum 82 und dem Ausgleichsraum 90. Bei Betätigung der Hydraulikgebervorrichtung wird der Kopf der Zugeinrichtung 70 in den Ventilsitz des Zentralventils gedrückt, so dass die Verbindung zwischen Druckraum 82 und Ausgleichsraum 90 unterbrochen wird.

Der Druckraum 82 wird durch die Primärdichtung 84 gegenüber der Innenwandung des Geberzylinders 80 abgedichtet. Die Dichtung 84 dichtet den Druckraum 82 gegenüber dem Hauptkörper 72 der Zugeinrichtung 70 ab. Bei der dargestellten Ausführung der Erfindung ist der Hauptkörper 72 der Zugeinrichtung 70 eine Stange.

Die Rückstellfeder 81 ist zwischen einer Buchse 811 und einer Scheibe 812 eingespannt. Bei der Bestätigung wird die Primärdichtung 84 mit der Zugeinrichtung 70 in Richtung der Buchse 811 bewegt, bis sie die Buchse 811 berührt. Durch den nach der Berührung entstehenden Druck wird das Zentralventil 750 und damit die Verbindung zwischen Druckraum 82 und Ausgleichsraum 90 durch die beispielsweise als O-Ring ausgebildete Dichtung 752 verschlossen, so dass sich Druck aufbauen kann und der hydraulische Nehmer betätigt werden kann. Dabei erfolgt ein Formschluss zwischen dem Kolben 73C und dem Ende der Zugeinrichtung 70, das den Kolben in Betätigungsrichtung gegen die Kraft der Rückstellfeder 81 und der Ventilfeder 751 in Richtung des Druckraums 82 bewegt. Der Abstand zwischen der Primärdichtung 84 und der Buchse 811 bestimmt somit den Leerweg der Hydraulikgebervorrichtung, der beispielsweise 0,3 bis 1 mm betragen kann. Im Ruhezustand ist das Zentralventil 750 geöffnet, so dass eine Verbindung zwischen Druckraum 82 und Ausgleichsraum 90 einen Ausgleich der Hydraulikflüssigkeit ermöglicht, die beispielsweise bei Erwärmung bzw. Verschleiß der Beläge (Bremse bzw. Kupplung etc.) erforderlich bzw. gewünscht ist.

Alternativ oder zusätzlich zu der Dichtung 752 kann die Ventilfeder 751 derart angeordnet und ausgebildet sein, dass eine Dichtung zwischen der Zugeinrichtung 70 und dem Kolben 73C geschaffen wird. Dabei kann die Ventilfeder 751 derart angeordnet und ausgebildet sein, dass sie eine Doppelfunktion hat und die Funktion der Dichtung mit übernimmt. Beispielsweise könnte die Ventilfeder einen Dichtungsring umfassen. Dabei kann die Ventilfeder aus einem geeigneten Material bzw. mehreren geeigneten Materialien ausgebildet sein.

Alternativ kann die Ventilfeder 751 auch wegegelassen werden. Damit das das Zentralventil 750 im Ruhezustand trotzdem geöffnet ist, kann die Dichtung 752 entsprechend ausgebildet sein, dass Sie das Zentralventil 750 erst ab einem bestimmten Druck schließt, der bei der Betätigung der Hydraulikarmatur sicher auftritt. Beispielsweise kann die Dichtung Fortsätze aufweisen, die bei der Betätigung zusammengepresst werden, so dass das Zentralventil nach einem kurzen Betätigungsweg bzw. einen durch das Zusammenpressen der Fortsätze bedingten Leerweg schließt, wenn die Dichtung nicht nur im Bereich der Fortsätze, sondern vollständig schließt.

Die Zugeinrichtung 70 kann beispielweise durch eine am Hebel vorgesehene Feder auf Zug vorgespannt sein und damit den Kolben 73C in seine Ruhestellung bringen.

An der dem Zentralventil 750 gegenüberliegenden Seite der Zugeinrichtung 70 ist eine Einstelleinrichtung 71A vorgesehen, mit der der Abstand zwischen der Verschiebeeinrichtung 60 und dem Kolben 73C eingestellt werde kann, um beispielsweise den Leerweg einstellen zu können. Die Einstelleinrichtung 71A weist eine Hülse auf, die auf dem Ende der Zugeinrichtung angeordnet ist. Beispielsweise kann die Hülse ein Innengewinde aufweisen, das mit einem Außengewinde auf der Stange der Zugeinrichtung 70 zusammenwirken kann, derart, dass durch Drehen der Hülse der Abstand zwischen Verschiebeeinrichtung 60 und Kolben 73C einstellbar ist.

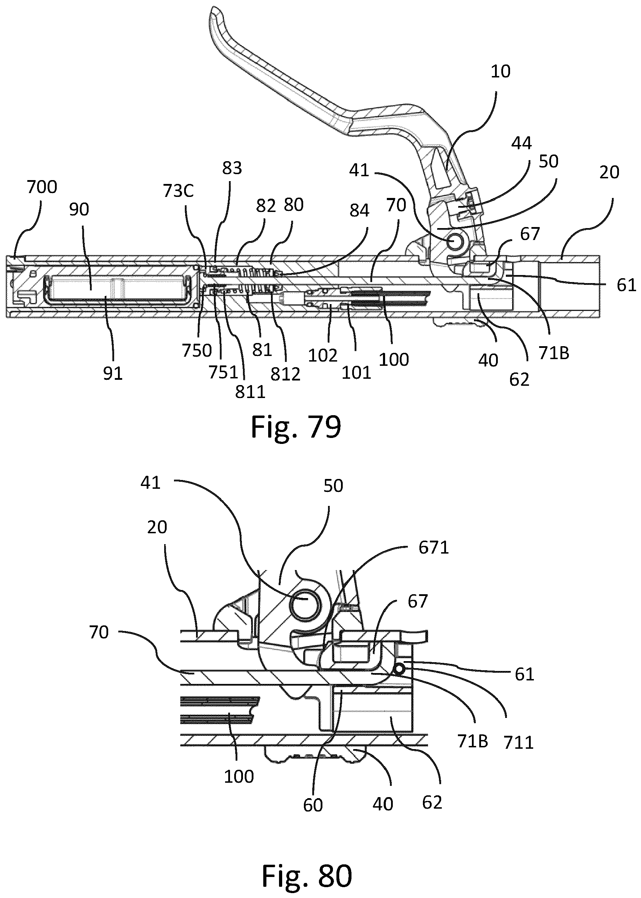

Die Figuren 79 und 80 zeigen Ansichten einer weiteren erfindungsgemäßen Hydraulikgebervorrichtung. Diese Ausführung entspricht im Wesentlichen der in den Figuren 77 und 78 gezeigten, wobei anstelle der Einstelleinrichtung 71A eine Verbindungseinrichtung 71B mit einer optionalen Verriegelungseinrichtung 711 vorgesehen ist.

Die Verbindungseinrichtung 71B kann dabei wie in den Figuren 79 und 80 gezeigt durch einen gebogenen Abschnitt der Zugeinrichtung 70 ausgebildet sein, der in der Verschiebeeinrichtung 60 angeordnet ist. Die Verschiebeeinrichtung 60 ist dabei zweigeteilt und umfasst eine Klemmeinrichtung 67. Die Verbindungeinrichtung 71B wird durch die Klemmeinrichtung 67 an der Verschiebeeinrichtung 60 befestigt. Bei den anderen Ausführungen der Erfindung erfolgt die Kraftübertragung zwischen Kolben 73 und Zugeinrichtung 70 über ein Gewindeverbindung bzw. einen Formschluss zwischen dem Kopf 71 der Zugeinrichtung 70 und der Verschiebeeinrichtung 60. Die in den Figuren 79 und 80 gezeigte Ausführung hat demgegenüber den Vorteil, dass sie kostengünstiger hergestellt und einfacher montiert werden kann.

Zur Montage können alle erforderlichen Bauteile der Ausführungsformen mit oder ohne Zentralventil bei einer "Perlenkette" aufgefädelt und dann in den Zylinder 80 gesteckt werden. Danach kann die Klemmeinrichtung 67 auf die Verschiebeeinrichtung 60 aufgesteckt und die Zugeinrichtung 70 mit ihrer Zugstange um einen bestimmten Winkel gebogen werden, um die Verbindungseinrichtung 71B auszubilden. Durch dieses Verfahren können die Montage vereinfacht und die Kosten für die Zugeinrichtung 70 deutlich gesenkt werden.

Die Klemmeinrichtung 67 kann eine Kontur 671 aufweisen, die derart ausgebildet sein kann, dass sich das Übersetzungsverhältnis der Hydraulikgebervorrichtung im Laufe der Betätigung wie gewünscht ändert.

Zur Sicherung der Verbindungseinrichtung 71B und einer einfachen Montage der Hydraulikgebervorrichtung in einem Lenker kann optional eine Sicherungseinrichtung 711 vorgesehen werden, die beispielsweise als ein Stift ausgebildet sein kann. Die Sicherungseinrichtung 711 dient dabei gleichzeitig als Abstützung für das gebogene Ende der Zugstange im Bereich der Verbindungseinrichtung 71B. Die durch die Sicherungseinrichtung 711 erfolgte Abstützung verhindert, dass das gebogene Ende der Zugstange bei häufiger bzw. starker Beanspruchung seine Form wegen der Abstützung beibehält. Das gewährleistet eine gleichbleibende und dauerhafte Funktion der Armatur. Die Abstützung hat auch den Vorteil, dass die Zugstange leichter bzw. kleiner ausgebildet werden kann, weil die Gefahr geringer ist, dass sie wegen der bei der Betätigung herrschenden Kräfte verformt werden kann.

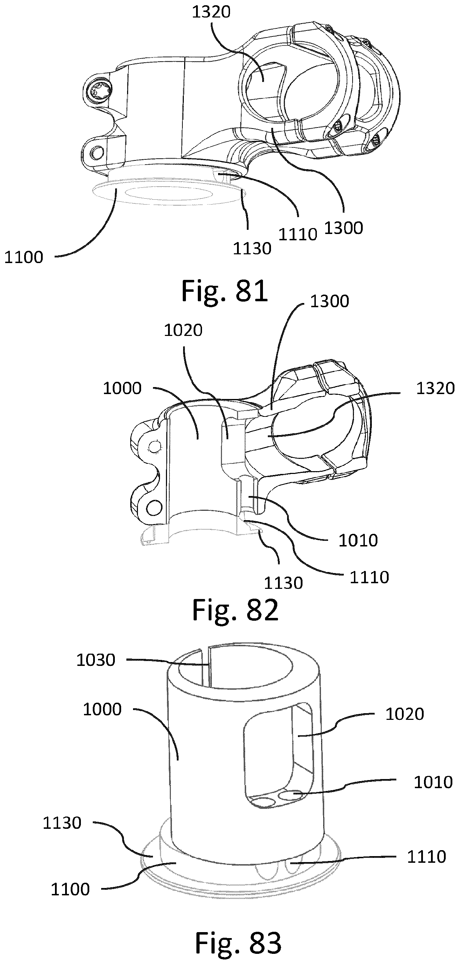

Die Figuren 81 bis 83 zeigen einen Lenkervorbau mit einer Hülse 1000 und einer Leitungsführungseinrichtung 1100 für eine hydraulische Bremse gemäß einer Ausführung der Erfindung.

Die Hülse 1000 ist derart ausgebildet und angeordnet, dass sie einen nicht dargestellten Gabelschaft exzentrisch aufnehmen kann. In der Hülse sind Aussparungen 1010 vorgesehen, in denen Hydraulikleitungen angeordnet bzw. aufgenommen werden können, die die Gebervorrichtung mit der Nehmervorrichtung der hydraulischen Bremse verbinden. Diese Leitungen können durch den Lenkervorbau 1300 zu der Hülse geführt werden. Dazu weist der Lenkervorbau 1300 eine Ausnehmung 1320 auf, an die sich eine Ausnehmung 1020 der Hülse anschließt, so dass eine in einem Lenker verlaufende Leitung durch den Lenkervorbau 1300 in die Ausnehmung 1020 der Hülse geführt werden kann. Von dort können die Leitungen nach unten in die Aussparungen 1010 geführt werden. Es sind zwei Aussparungen vorgesehen, die beispielsweise für die Verlegung einer Leitung einer Vorderradbremse und die Verlegung einer Leitung einer Hinterradbremse verwendet werden können.

Unter der Hülse 1000 ist eine optionale Leitungsführungseinrichtung 1100 vorgesehen, die zwei Aussparungen 1110 aufweist, die sich an die Aussparungen 1010 anschließen. Die Leitungsführungseinrichtung 1100 weist einen optionalen Bund 1130 zur Abstützung an dem Lenkervorbau auf.

Die Hülse 1000 weist in dem Bereich, der den Aussparungen 1010 gegenüberliegt, einen Schlitz auf. Das ermöglicht, dass die Hülse gemeinsam mit dem Lenkervorbau an den nicht dargestellten Gabelschaft geklemmt werden kann.

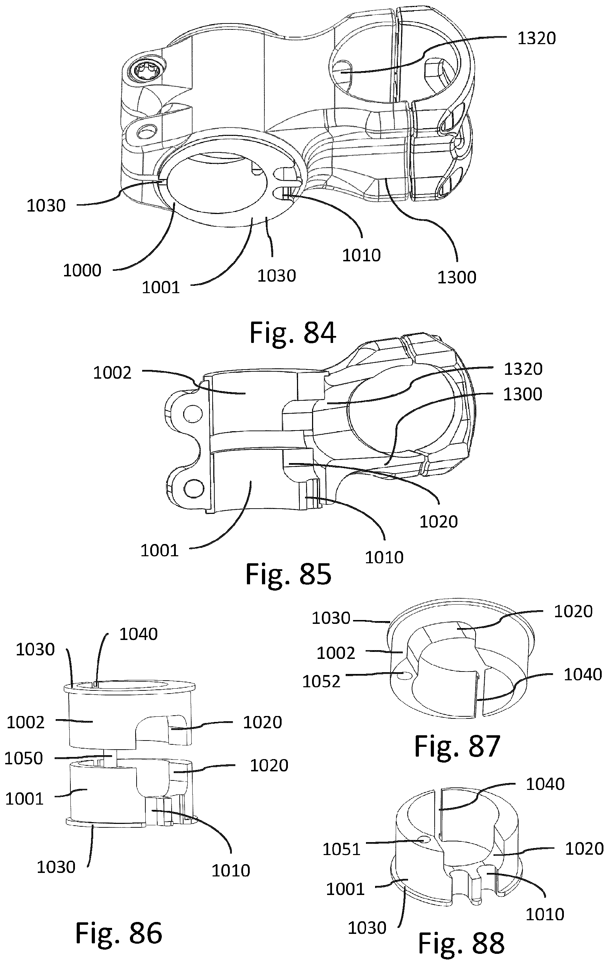

Die Figuren 84 bis 88 zeigen einen Lenkervorbau mit einer Hülse 1000 für eine hydraulische Bremse gemäß einer weiteren Ausführung der Erfindung. Bei dieser Ausführung ist die Hülse zweigeteilt und weist ein Unterteil 1001 und ein Oberteil 1002 auf. Die Leitungsführungseinrichtung ist in dem Unterteil 1001 integriert, das zudem einen Bund 1030 zur Abstützung an dem Lenkervorbau aufweist. Das Oberteil 1002 weist einen entsprechenden Bund auf.

Das Oberteil 1002 und das Unterteil 1001 können mit einer Verbindungseinrichtung 1050 miteinander verbunden sein. Die Verbindungseinrichtung 1050 kann beispielsweise einen Stift oder einen Bolzen aufweisen, dessen eines Ende in einer in dem Unterteil 1001 vorgesehenen Aussparung 1051 eingreift, und dessen gegenüberliegendes Ende in eine entsprechende in dem Oberteil 1002 vorgesehene Aussparung 1052 eingreift. Es können auch mehrere entsprechende Verbindungseinrichtungen vorgesehen sein.

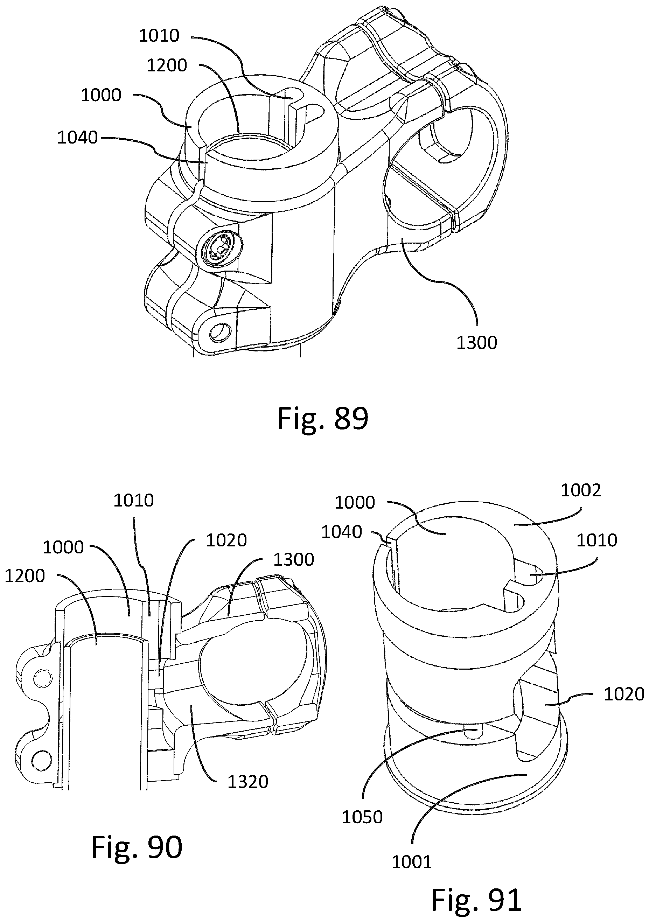

Die Figuren 89 bis 91 zeigen einen Lenkervorbau mit einer Hülse 1000 für eine hydraulische Bremse gemäß einer weiteren Ausführung der Erfindung. Die Hülse 1000 ist wieder zweigeteilt und weist ein Oberteil 1002 und ein Unterteil 1001 auf. Die Aussparungen 1010 sind in dem Oberteil 1002 ausgebildet, so dass die Leitungen nach oben und dann in den Gabelschaft geführt werden können.

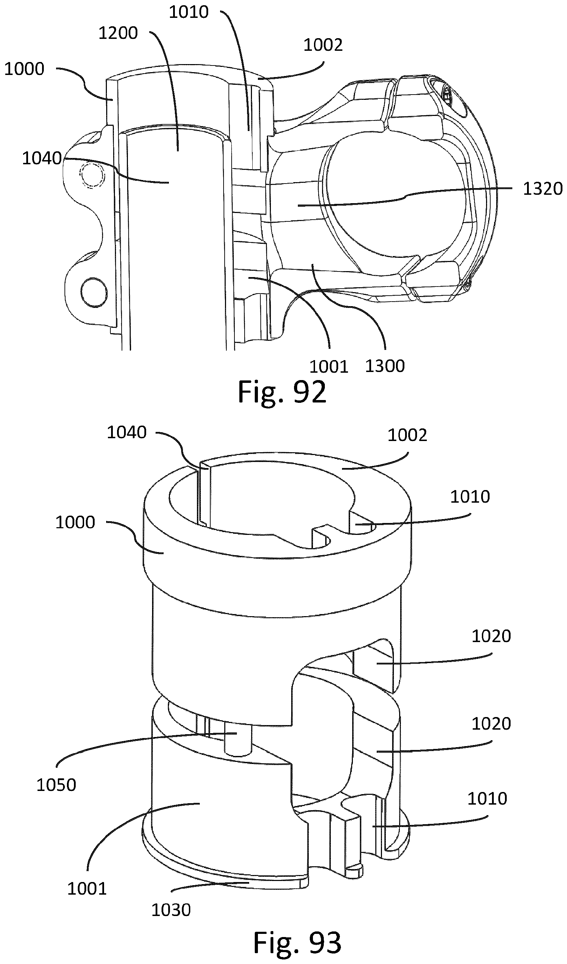

Die Figuren 92 bis 93 zeigen einen Lenkervorbau mit einer Hülse 1000 für eine hydraulische Bremse gemäß einer weiteren Ausführung der Erfindung. Die Hülse 1000 ist wieder zweigeteilt und weist ein Oberteil 1002 und ein Unterteil 1001 auf. Die Aussparungen 1010 sind in dem Oberteil 1002 und dem Unterteil 1001 ausgebildet, so dass die Leitungen nach oben in den Gabelschaft und/oder nach unten geführt werden können. Beispielsweise kann eine Leitung nach oben in den Gabelschaft für die Vorderradbremse und eine Leitung nach unten für die Hinterradbremse geführt werden. In diesem Fall kann auch nur jeweils eine Aussparung vorgesehen werden, d.h. eine Aussparung 1010 in dem Oberteil 1002 und eine Aussparung 1010 in dem Unterteil 1001.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Hydraulikgebervorrichtung (1), insbesondere für eine hydraulische Bremse oder Kupplung lenkergeführter Fahrzeuge mit einem Hebel (10), der in einer Aufnahme (40) drehgelenkig angeordnet ist, und einem Hydraulikzylinder (80), der in einem Lenkerrohr (20) des lenkergeführten Fahrzeugs anordbar ist und einen darin verschiebbar angeordneten Kolben (73A; 73B; 73C) aufweist, **dadurch gekennzeichnet, dass** in dem Kolben (73A; 73B; 73C) ein Zentralventil (750) angeordnet ist, wobei die Hydraulikgebervorrichtung (1) eine Zugeinrichtung (70) aufweist, die bei der Betätigung des Hydraulikgebervorrichtung (1) eine Zugkraft auf den Kolben (73A; 73B; 73C) des Hydraulikzylinders (80) ausübt.

2. Hydraulikgebervorrichtung (1) nach Anspruch 1, **dadurch gekennzeichnet, dass** das Zentralventil (750) einen Ventilsitz aufweist, wobei der Ventilsitz des Zentralventils in dem Kolben ausgebildet ist.

3. Hydraulikgebervorrichtung (1) nach einem der vorhergehenden Ansprüche, **dadurch gekennzeichnet, dass** das Zentralventil (750) ein Schließglied aufweist, wobei das Schließglied des Zentralventils (750) durch ein Ende der durch den Kolben verlaufenden Zugeinrichtung (70) gebildet wird.

4. Hydraulikgebervorrichtung (1) nach einem der vorhergehenden Ansprüche, **dadurch gekennzeichnet, dass** der Hebel (10) ein Kraftübertragungsglied aufweist, und dass die Hydraulikgebervorrichtung (1) einen Einsatz (700) zum Einstecken in ein Lenkerrohr (20) umfasst, wobei der Einsatz (700) ein Ende umfasst, an dem der Hydraulikzylinder (80, 710) mit einem Druckraum (82) angeordnet ist, in dem der Kolben (73B) verschiebbar angeordnet ist, und eine Eingriffsöffnung (720) für den Eingriff des Kraftübertragungsglieds umfasst.

5. Hydraulikgebervorrichtung (1) nach einem der vorhergehenden Ansprüche, **dadurch gekennzeichnet, dass** die Zugeinrichtung (70) eine Zugstange umfasst.

6. Hydraulikgebervorrichtung (1) nach Anspruch 5, wobei die Zugstange einen gebogenen Abschnitt aufweist.

7. Hydraulikgebervorrichtung (1) nach Anspruch 6, wobei die Hydraulikgebervorrichtung (1) eine Verschiebeeinrichtung (60) aufweist, die in dem Lenkerrohr (20) des lenkergeführten Fahrzeugs in Längsrichtung des Lenkerrohrs (20) verschiebbar angeordnet ist, wobei die Zugeinrichtung eine Sicherungseinrichtung aufweist, die derart ausgebildet und angeordnet ist, dass sie die Zugeinrichtung in der Verschiebeeinrichtung (60) sichert und den gebogenen Abschnitt der Zugstange derart abstützt, dass eine Verformung des gebogenen Abschnitts verhindert wird.

8. Hydraulikgebervorrichtung (1) nach einem der vorhergehenden Ansprüche, **dadurch gekennzeichnet, dass** ein Hydraulikkanal (75) von dem Hydraulikzylinder (80) zu der Hydraulikleitung (100), die mit der zugeordneten Hydrauliknehmervorrichtung verbunden ist, in der Zugeinrichtung (70) angeordnet ist.

9. Hydraulikgebervorrichtung (1) nach einem der vorhergehenden Ansprüche, **dadurch gekennzeichnet, dass** die Hydraulikgebervorrichtung (1) eine Verschiebeeinrichtung (60) aufweist, die in dem Lenkerrohr (20) des lenkergeführten Fahrzeugs in Längsrichtung des Lenkerrohrs (20) verschiebbar angeordnet ist, wobei die Verschiebeeinrichtung (60) mit der Zugeinrichtung (70) verbunden ist.

10. Hydraulikgebervorrichtung (1) nach einem der vorhergehenden Ansprüche, **dadurch gekennzeichnet, dass** der Hebel (10) an zwei Drehachsen (41A, 41B) angelenkt ist, an denen zwei an dem Hebel (10) drehgelenkig angeordnete Arme (51A, 51B) angreifen, wobei der eine Arm (51B) Teil eines Druckstücks (50B) ist.

11. Hydraulikgebervorrichtung (1) nach einem der vorhergehenden Ansprüche, **dadurch gekennzeichnet, dass** die Hydraulikgebervorrichtung (1) eine Griffweiteneinstellvorrichtung aufweist, mit der der Abstand zwischen der Aufnahme (40) für den Hebel (10) und dem Hydraulikzylinder (80) zur Einstellung der Griffweite einstellbar ist.

12. Hydraulikgebervorrichtung (1) nach einem der vorhergehenden Ansprüche, **dadurch gekennzeichnet, dass** die Aufnahme (40) auf dem Lenkerrohr (20) verschiebbar angeordnet ist.

13. Hydraulikgebervorrichtung (1) nach einem der vorhergehenden Ansprüche, **dadurch gekennzeichnet, dass** der Hydraulikzylinder (80) in dem Lenkerrohr (20) verschiebbar angeordnet ist, wobei vorzugsweise die Länge der Zugeinrichtung (70) einstellbar ist.

14. Hydraulikgebervorrichtung (1) nach einem der vorhergehenden Ansprüche, **dadurch gekennzeichnet, dass** die Hydraulikgebervorrichtung (1) einen in dem Lenkerrohr angeordneten Ausgleichsraum (90) aufweist.

15. Hydraulikgebervorrichtung (1) nach Anspruch 14, **dadurch gekennzeichnet, dass** der Hydraulikzylinder (80) zwischen der Aufnahme (40) für den Hebel (10) und dem Ausgleichsraum (90) angeordnet ist.

## Claims

1. Hydraulic master apparatus (1), in particular for a hydraulic brake or clutch of handlebar-guided vehicles, comprising a lever (10), which is pivotally arranged in a support (40), and a hydraulic cylinder (80), which can be arranged in a handlebar tube (20) of the handlebar-guided vehicle and has a piston (73A; 73B; 73C) arranged therein so as to be movable, **characterized in that** a central valve (750) is arranged in the piston (73A; 73B; 73C), the hydraulic master apparatus (1) having a pulling device (70), which exerts a pulling force on the piston (73A; 73B; 73C) of the hydraulic cylinder (80) when the hydraulic master apparatus (1) is actuated.

2. Hydraulic master apparatus (1) according to claim 1, **characterized in that** the central valve (750) has a valve seat, the valve seat of the central valve being formed in the piston.

3. Hydraulic master apparatus (1) according to any one of the preceding claims, **characterized in that** the central valve (750) has a closing member, the closing member of the central valve (750) being formed by one end of the pulling device (70) extending through the piston.

4. Hydraulic master apparatus (1) according to any one of the preceding claims, **characterized in that** the lever (10) has a force transmission member and **in that** the hydraulic master apparatus (1) comprises an insert (700) for insertion into a handlebar tube (20), the insert (700) comprising an end at which the hydraulic cylinder (80, 710) is arranged with a pressure chamber (82), in which the piston (73B) is arranged so as to be movable, and comprising an engagement opening (720) for the engagement of the force transmission member.

5. Hydraulic master apparatus (1) according to any one of the preceding claims, **characterized in that** the pulling device (70) comprises a pull rod.

6. Hydraulic master apparatus (1) according to claim 5, wherein the pull rod includes a bent portion.

7. Hydraulic master apparatus (1) according to claim 6, wherein the hydraulic master apparatus (1) has a shifting device (60), which is arranged in the handlebar tube (20) of the handlebar-guided vehicle so as to be movable in the longitudinal direction of the handlebar tube (20), the pulling device having a safety device which is designed and arranged in such a way that it secures the pulling device in the shifting device (60) and supports the bent portion of the pull rod in such a way that a deformation of the bent portion is prevented.

8. Hydraulic master apparatus (1) according to any one of the preceding claims, **characterized in that** a hydraulic channel (75) from the hydraulic cylinder (80) to the hydraulic line (100), which is connected to the associated hydraulic slave apparatus, is arranged in the pulling device (70).

9. Hydraulic master apparatus (1) according to any one of the preceding claims, **characterized in that** the hydraulic master apparatus (1) has a shifting device (60), which is arranged in the handlebar tube (20) of the handlebar-guided vehicle so as to be movable in the longitudinal direction of the handlebar tube (20), the shifting device (60) being connected to the pulling device (70).

10. Hydraulic master apparatus (1) according to any one of the preceding claims, **characterized in that** the lever (10) is hinged to two axes of rotation (41 A, 41B) where two arms (51A, 51B) engage that are pivotally arranged on the lever (10), one arm (51B) being part of a pressure piece (50B).

11. Hydraulic master apparatus (1) according to any one of the preceding claims, **characterized in that** the hydraulic master apparatus (1) has a grip width adjusting apparatus, by means of which the distance between the support (40) for the lever (10) and the hydraulic cylinder (80) can be adjusted in order to adjust the grip width.

12. Hydraulic master apparatus (1) according to any one of the preceding claims, **characterized in that** the support (40) is arranged on the handlebar tube (20) so as to be movable.

13. Hydraulic master apparatus (1) according to any one of the preceding claims, **characterized in that** the hydraulic cylinder (80) is arranged in the handlebar tube (20) so as to be movable, preferably the length of the pulling device (70) being adjustable.

14. Hydraulic master apparatus (1) according to any one of the preceding claims, **characterized in that** the hydraulic master apparatus (1) has a compensating chamber (90) arranged in the handlebar tube.

15. Hydraulic master apparatus (1) according to claim 14, **characterized in that** the hydraulic cylinder (80) is arranged between the support (40) for the lever (10) and the compensating chamber (90).

## Revendications

1. Dispositif émetteur hydraulique (1), en particulier pour un frein ou un accouplement hydraulique de véhicules guidés par guidon, comprenant un levier (10) qui est disposé de manière articulée en rotation dans un logement (40), et un vérin hydraulique (80) qui peut être disposé dans un tube de guidon (20) du véhicule guidé par guidon et qui présente un piston (73A ; 73B ; 73C) disposé de manière à pouvoir être déplacé dans celui-ci,
**caractérisé en ce qu'**une soupape centrale (750) est disposée dans le piston (73A ; 73B ; 73C),
le dispositif émetteur hydraulique (1) comprenant un organe de traction (70) qui, lors de l'actionnement du dispositif émetteur hydraulique (1), exerce une force de traction sur le piston (73A ; 73B ; 73C) du vérin hydraulique (80).

2. Dispositif émetteur hydraulique (1) selon la revendication 1,
**caractérisé en ce que** la soupape centrale (750) comprend un siège de soupape, le siège de soupape de la soupape centrale étant réalisé dans le piston.

3. Dispositif émetteur hydraulique (1) selon l'une des revendications précédentes,
**caractérisé en ce que** la soupape centrale (750) comprend un organe de fermeture, l'organe de fermeture de la soupape centrale (750) étant formé par une extrémité de l'organe de traction (70) traversant le piston.

4. Dispositif émetteur hydraulique (1) selon l'une des revendications précédentes,
**caractérisé en ce que** le levier (10) comprend un organe de transmission de force, et
**en ce que** le dispositif émetteur hydraulique (1) comprend un insert (700) destiné à être enfiché dans un tube de guidon (20), l'insert (700) présentant une extrémité sur laquelle est disposé le vérin hydraulique (80, 710) avec une chambre de pression (82) dans laquelle un piston (73B) est disposé de manière à pouvoir être déplacé, et présentant une ouverture d'engagement (720) pour l'engagement de l'organe de transmission de force.

5. Dispositif émetteur hydraulique (1) selon l'une des revendications précédentes,
**caractérisé en ce que** l'organe de traction (70) comprend une barre de traction.

6. Dispositif émetteur hydraulique (1) selon la revendication 5,
dans lequel la barre de traction présente une portion courbée.

7. Dispositif émetteur hydraulique (1) selon la revendication 6,
dans lequel le dispositif émetteur hydraulique (1) comprend un organe de déplacement (60) qui est disposé dans le tube de guidon (20) du véhicule guidé par guidon de manière à pouvoir être déplacé dans la direction longitudinale du tube de guidon (20), l'organe de traction (70) comprenant un organe de blocage qui est conçu et agencé de manière à bloquer l'organe de traction dans l'organe de déplacement (60) et à soutenir la portion courbée de la barre de traction de manière à empêcher une déformation de la portion courbée.

8. Dispositif émetteur hydraulique (1) selon l'une des revendications précédentes,
**caractérisé en ce qu'**un canal hydraulique (75) allant du vérin hydraulique (80) à la conduite hydraulique (100), reliée au dispositif récepteur hydraulique associé, est disposé dans l'organe de traction (70).

9. Dispositif émetteur hydraulique (1) selon l'une des revendications précédentes,
**caractérisé en ce que** le dispositif émetteur hydraulique (1) comporte un organe de déplacement (60) qui est disposé dans le tube de guidon (20) du véhicule guidé par guidon de manière à pouvoir être déplacé dans la direction longitudinale du tube de guidon (20), l'organe de déplacement (60) étant relié à l'organe de traction (70).

10. Dispositif émetteur hydraulique (1) selon l'une des revendications précédentes,
**caractérisé en ce que** le levier (10) est articulé sur deux axes de rotation (41A, 41B) sur lesquels viennent en prise deux bras (51A, 51B) articulés en rotation sur le levier (10), l'un des bras (51B) faisant partie d'une pièce de pression (50B).

11. Dispositif émetteur hydraulique (1) selon l'une des revendications précédentes,
**caractérisé en ce que** le dispositif émetteur hydraulique (1) comporte un dispositif de réglage de la largeur de préhension, qui permet de régler la distance entre le logement (40) pour le levier (10) et le vérin hydraulique (80) pour régler la largeur de préhension.

12. Dispositif émetteur hydraulique (1) selon l'une des revendications précédentes,
**caractérisé en ce que** le logement (40) est disposé sur le tube de guidon (20) de manière à pouvoir être déplacé.

13. Dispositif émetteur hydraulique (1) selon l'une des revendications précédentes,
**caractérisé en ce que** le vérin hydraulique (80) est disposé de manière à pouvoir être déplacé dans le tube de guidon (20), de préférence, la longueur de l'organe de traction (70) étant réglable.

14. Dispositif émetteur hydraulique (1) selon l'une des revendications précédentes,
**caractérisé en ce que** le dispositif émetteur hydraulique (1) présente un espace de compensation (90) disposé dans le tube de guidon.

15. Dispositif émetteur hydraulique (1) selon la revendication 14,
**caractérisé en ce que** le vérin hydraulique (80) est disposé entre le logement (40) pour le levier (10) et l'espace de compensation (90).
